(19) Europäisches Patentamt
European Patent Office
Office européen des brevets

(11) EP 1 964 859 A1

(12) # EUROPEAN PATENT APPLICATION

(43) Date of publication:
**03.09.2008 Bulletin 2008/36**

(51) Int Cl.:
***C08F 10/00*** *(2006.01)*

(21) Application number: **08250646.0**

(22) Date of filing: **26.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.02.2007 US 904127 P**

(71) Applicant: **Rohm and Haas Company**
**Philadelphia, PA 19106-2399 (US)**

(72) Inventors:
- **Acholla, Francis V.**
  **Yardley, Pennsylvania 19067 (US)**
- **Goodall, Brian Leslie**
  **Seattle, Washington 98121 (US)**
- **McIntosh, Lester Howard III**
  **Green Lane, Pennsylvania 18084 (US)**
- **Shen, Han**
  **Philadelphia, Pennsylvania 19103 (US)**

(74) Representative: **Kent, Venetia Katherine et al**
**Rohm and Haas Europe Services ApS - UK Branch**
**European Patent Department**
**4th Floor, 22 Tudor Street**
**London EC4Y 0AY (GB)**

(54) **A porous linear polymer composition**

(57) A porous polymer composition including plural linear mixed polarity polymer particles, wherein the particles include a linear poly[(non-polar olefin)-(polar olefin)] and at least one pore, is disclosed, as are those particles further including a catalytic component. A method of forming the plural linear mixed polarity polymer particles is also disclosed. A method of using plural linear mixed polarity polymer particles which include a catalytic component to catalyze polymerization is further disclosed. A porous polymer composition including plural linear non-polar polymer particles and a catalytic component is further disclosed, along with a method of making those linear non-polar polymer particles including the catalytic component and a method of using them to catalyze polymerization.

EP 1 964 859 A1

## Description

This invention was made with United States Government support under ATP Award No. 70NANB4H3014 awarded by the National Institute of Standards and Technology (NIST). The United States Government has certain rights in the invention.

The present invention relates to porous linear polymer particles. The present invention also relates to porous linear polymer particles including a catalyst component capable of polymerizing non-polar olefins, and non-polar olefins in combination with polar olefins, to form linear polymers. The present invention further relates to a method for preparing the porous linear polymer particles, and to a method of using the porous linear polymer particles, including the catalyst component to prepare linear poly(non-polar olefin)s and linear poly[(non-polar olefin)-(polar olefin)]s.

It is known in the art of olefin polymerization that certain single-site early metal catalysts are able to catalyze the polymerization of non-polar olefins to form linear poly(non-polar olefins). While the ability to form such linear non-polar polymers is, in itself, commercially important, the form in which they can be isolated from production reactors must be carefully tailored and controlled if processes and products are to be commercially viable. These polymerization reactions are typically carried out in the presence of inorganic support particles, such as magnesium chloride or silica (see Chem. Rev. 2000, 100, 1347-1375). When these polymerization reactions are attempted absent such support particles, particle size control is poor at best, reactor fouling with concomitant down time and productivity loss is common, and the bulk density of particles produced is low and commercially unacceptable. As a further complication, introduction of even trace amounts of a polar monomer into these polymerization reaction systems poisons the single-site early metal catalyst such that no coordination polymer is produced. Such poisoning not only stalls individual polymerizations in a commercial plant, but also poisons subsequent batches. As a result, commercial polymerization facilities employing the single-site early metal catalyst are restricted to the exclusive use of non-polar monomers. Alternatively, efforts of others *(*Angew. Chem. Int. Ed. 1999 38, No. 8, 1058-1060) have focused on so called self-supported catalysts wherein metallocene complexes bearing ligands functionalized with vinyl groups are synthesized and used as catalysts having the characteristic that they behave as monomers and become covalently bound to the growing polymer. Unfortunately, synthesis of these double bond functional metallocenes tends to be involved and there utility in terms of poisoning by polar monomers remains limited because they are metallocenes.

There exists, then, a need for a catalyst that can produce linear copolymers of non-polar olefins and polar monomers. There further exists a need for polymerization systems that, without recourse to introduction of other support particles (e.g., inorganic), form porous linear poly[(non-polar olefin)-(polar olefin)] particles themselves capable of supporting further polymerization of non-polar olefins and polar olefins to produce linear copolymers in commercially viable particulate form. Beyond these needs, there exists a need for a catalyst that can polymerize non-polar olefins to form linear poly(non-polar olefin) in commercial reaction vessels that have hosted polymerization reactions incorporating polar monomers or have otherwise been exposed to polar monomers, robustly doing so without loss of activity or desirable product characteristics.

We have, surprisingly, discovered that the problems just enumerated may be overcome by the late transition metal catalysts of the present invention. We have discovered that porous linear polymer particles can be formed using those catalysts, and that polymerizations supported by those porous linear polymer particles further including the catalysts produce bulk particles having high bulk densities. The porous polymer particles are formed using non-polar olefins, or combinations of non-polar and polar olefins, and the polymers formed are linear polymers. Because these catalysts are not poisoned by polar olefins, commercial plant batches may alternate between polymerizations including polar monomers and polymerizations confined to non-polar olefins without recourse to extensive, time-consuming, and often inadequate, cleaning procedures to eliminate even trace levels of polar monomers.

A first aspect of the present invention relates to a porous linear mixed polarity polymer composition including:

plural porous linear mixed polarity polymer particles including:

(A) a linear poly[(non-polar olefin)-(polar olefin)] including, as polymerized units, a non-polar olefin and a polar olefin, wherein the linear poly[(non-polar olefin)-(polar olefin)]:

(a) is a coordination polymer; and

(b) has a branch content of 0 branches/1,000 carbon atoms to no more than 15 branches/1,000 carbon atoms, as determined by Carbon 13 NMR; and

(B) a at least one pore,

wherein the porous plural linear mixed polarity polymer particles have:

(i) an average particle diameter of at least 1 microns to no more than 1000 microns;
(ii) a total pore volume of at least 0.10 cc/g to no more than 9.00 cc/g, as measured by BET Nitrogen adsorption in cubic centimeters of pore volume per gram of the linear mixed polarity polymer particles, for all pores having a diameter of 0.005 microns to 10 microns; and
(iii) a surface area of at least 10 square meters/g to no more than 1000 square meters/g, as measured by BET Nitrogen adsorption.

A second aspect of the present invention relates to a porous linear non-polar polymer composition including:

plural porous linear non-polar polymer particles including:

(A) a linear poly(non-polar olefin) including, as polymerized units, a non-polar olefin,
wherein the linear poly(non-polar olefin):

(a) is a coordination polymer; and
(b) has a branch content of 0 branches/1,000 carbon atoms to no more than 15 branches/1,000 carbon atoms, as determined by Carbon 13 NMR;

(B) a catalytic component including an organometallic complex capable of copolymerizing the non-polar olefin to form the linear poly(non-polar olefin),
wherein the organometallic complex includes a metal center, M, complexed with at least one ligand, wherein the at least one ligand has a structure according to Formula (I)

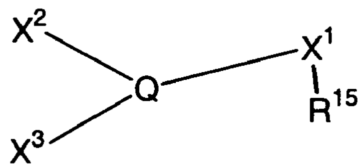

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$; and
(C) at least one pore,

wherein the plural porous linear non-polar polymer particles have:

(i) an average particle diameter of at least 2 microns to no more than 1000 microns;
(ii) a total pore volume of at least 0.10 cc/g to no more than 9.00 cc/g, as measured by BET Nitrogen adsorption in cubic centimeters of pore volume per gram of the linear mixed polarity polymer particles, for all pores having a diameter of 0.005 microns to 10 microns; and
(iii) a surface area of at least 10 square meters/g to no more than 1000 square meters/g, as measured by BET Nitrogen adsorption; and

wherein the non-polar olefin is selected from ethylene, a $C_2$-$C_{20}$ acyclic aliphatic olefin, and combinations thereof.
A third aspect of the present invention relates to the first aspect of the present invention wherein the plural porous linear mixed polarity polymer particles further include a catalytic component as defined above for the second aspect of the present invention.
A fourth aspect of the present invention relates to a process of making a porous linear polymer composition, including the steps of:

(A) combining:

(i) a catalytic component including an organometallic complex capable of copolymerizing a first monomer to form a first linear polymer,

wherein the organometallic complex includes a metal center, M, complexed with at least one ligand, wherein the at least one ligand has a structure according to Formula (I)

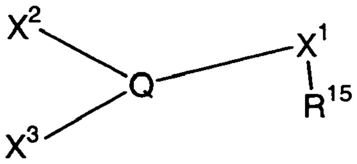

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$;
(ii) a diluent, wherein the diluent is not miscible with the first linear polymer; and
(iii) a first monomer selected from a non-polar olefin, or from a combination of a non-polar olefin and a polar olefin, wherein:

the non-polar olefin is selected from ethylene, a $C_2$-$C_{20}$ acyclic aliphatic olefin, and combinations thereof; and the polar olefin is represented by Formula III

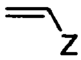

(III)

wherein Z is selected from an aromatic hydrocarbyl group, -OY, -COY and -CO2Y; where Y is selected from hydrogen and R19; where R19 is selected from a hydrocarbyl group, an aromatic hydrocarbyl group and derivatives thereof; and wherein the first monomer is miscible with the diluent;
(B) polymerizing the first monomer, in the presence of the catalytic component, to form plural porous linear polymer particles including:

(i) a first linear polymer which:

(a) is a coordination polymer;
(b) is a linear polymer, having a branch content of 0 branches/1,000 carbon atoms to no more than 15 branches/1,000 carbon atoms, as determined by Carbon 13 NMR; and
(c) is a linear polymer selected from linear poly(non-polar olefin), linear poly[(non-polar olefin)-(polar olefin)], and combinations thereof; and

(ii) at least one pore,

wherein the first linear polymer precipitates from the diluent to form the plural porous linear polymer particles; wherein the plural porous linear polymer particles have:

(a) an average particle diameter of at least 1 microns to no more than 1000 microns;
(b) a total pore volume of at least 0.10 cc/g to no more than 9.00 cc/g, as measured by BET Nitrogen adsorption in cubic centimeters of pore volume per gram of the mixed polarity framework, for all pores having a diameter of 0.005 microns to 10 microns; and
(c) a surface area of at least 10 square meters/g to no more than 1000 square meters/g, as measured by BET Nitrogen adsorption; and

(C) optionally, isolating the plural porous linear polymer particles.

A fifth aspect of the present invention relates to inclusion of a further step in the process of the fourth aspect

or the present invention wherein a second polymerization of a second monomer is carried out in the presence of the plural porous linear polymer particles and a catalyst component.

BRIEF DESCRIPTION OF THE FIGURES

FIG. **1** FESEM micrographs of the Example 7 plural porous linear mixed polarity polymer (LMPP) particles, wherein the linear mixed polarity polymer is linear poly(ethylene-co-methyl acrylate). FIG. **1a** micrograph was taken at 2.0 kilovolts (kV) and X50 magnification. FIG. **1b** micrograph was taken at 2.0 kilovolts (kV) and X1,000 magnification.
FIG. **2** FESEM micrographs of the Example 8 plural porous linear mixed polarity polymer (LMPP) particles, wherein the linear mixed polarity polymer is linear poly(ethylene-co-methyl acrylate). FIG. **2** micrograph was taken at 2.0 kilovolts (kV) and X50 magnification.
FIG. **3** FESEM micrographs of the Example 13 plural porous linear mixed polarity polymer (LMPP) particles, wherein the linear mixed polarity polymer is linear poly(ethylene-co-methyl acrylate). FIG. **3a** micrograph was taken at 15 kilovolts (kV) and X25 magnification. FIG. **3b** micrograph was taken at 15 kilovolts (kV) and X100 magnification.
A more detailed description of the plural porous linear mixed polarity particles of **Figures 1, 2,** and **3** can be found in Examples 7, 8, and 13, respectively.
Used herein, the following terms have these definitions:
The words "a" and "an" as used in the specification mean "at least one", unless otherwise specifically stated.
"Range". Disclosures of ranges herein take the form of lower and upper limits. There may be one or more lower limits and, independently, one or more upper limits. A given range is defined by selecting one lower limit and one upper limit. The selected lower and upper limits then define the boundaries of that particular range. All ranges that can be defined in this way are inclusive and combinable, meaning that any lower limit may be combined with any upper limit to delineate a range.
The term "ethylenically unsaturated monomer" refers to a molecule having one or more carbon-carbon double bonds, and capable of coordination polymerization. The term "monoethylenically unsaturated monomer" refers to an ethylenically unsaturated monomer having one carbon-carbon double bond capable of coordination polymerization.
The term "non-polar olefinic monomer" (alternatively "non-polar olefin") refers to an ethylenically unsaturated monomer consisting exclusively of hydrogen and carbon atoms. The non-polar olefinic monomers of the present invention are any non-polar olefinic monomers capable of being polymerized using the catalytic component of the present invention to form a "linear poly(non-polar olefin)" or a "linear poly[(non-polar olefin)-(polar olefin)]".
The term "polar olefinic monomer" (alternatively "polar olefin") refers to an ethylenically unsaturated monomer including at least one atom other than carbon or hydrogen. The polar olefin of the present invention is any polar olefin capable of being polymerized, in combination with a non-polar olefin of the present invention, using the catalytic component of the present invention to form a "linear poly[(non-polar olefin)-(polar olefin)]".
An "addition polymer" is a polymer capable of being prepared by addition polymerization, and selected from the group consisting of poly(non-polar olefin), poly(polar olefin), poly[(polar olefin)-(non-polar olefin)], and combinations thereof.
A "poly(non-polar olefin)" is a polymer including one or more non-polar olefinic monomers, as polymerized units. As such, a "poly(non-polar olefin)" may be a homopolymer or a copolymer, and the copolymer may be, for example, a random copolymer
A "poly(polar olefin)" is a polymer including, as polymerized units, one or more polar olefinic monomers. As such, a "poly(polar olefin)" may be a homopolymer or a copolymer, and the copolymer may be, for example, a random copolymer.
A "poly[(non-polar olefin)-(polar olefin)]" is a copolymer including one or more non-polar olefinic monomers and one or more polar olefinic monomers, as polymerized units, and the copolymer may be, for example, a random copolymer.
It will be recognized that, herein, the term poly(non-polar olefin) may refer to a homopolymer containing, as polymerized units, a single non-polar olefin, or alternatively may refer to a copolymer containing, as polymerized units, two or more non-polar olefins. It will further be recognized that the term poly[(non-polar olefin)-(polar olefin)] may refer to a copolymer containing, as polymerized units, a single non-polar olefin and a single polar olefin, or alternatively may refer to a copolymer containing, as polymerized units, two or more of either or both of non-polar olefin and one polar olefin.
A "first ethylenically unsaturated monomer" ("first monomer") is an ethylenically unsaturated monomer that is capable of being polymerized in the presence of the catalytic component of the present invention to form a first linear polymer. The first monomer is a first non-polar monomer or a first polar monomer.
A "first linear polymer" is a linear polymer selected from a linear poly(non-polar olefin), linear poly[(non-polar olefin)-(polar olefin)], and combinations thereof. The first linear polymer is a coordination polymer having a branch content of: at least 0, at least 0.5, at least 1, or at least 2 branches/1,000 carbon atoms; and no more than 15, no more than 10, or no more than 5 branches/1,000 carbon atoms, as determined by Carbon 13 NMR (see the Experimental Section). A

first linear polymer may be formed by polymerization of first monomer during a "first polymerization" in the presence of the catalytic component of the present invention.

A "linear poly(non-polar olefin)" is a poly(non-polar olefin) which is a coordination polymer having a branch content of: at least 0, at least 0.5, at least 1, or at least 2 branches/1,000 carbon atoms; and no more than 15, no more than 10, or no more than 5 branches/1,000 carbon atoms, as determined by Carbon 13 NMR.

A "linear poly[(non-polar olefin)-(polar olefin)]" is a poly[(non-polar olefin)-(polar olefin)] which is a coordination polymer having a branch content of: at least 0, at least 0.5, at least 1, or at least 2 branches/1,000 carbon atoms; and no more than 15, no more than 10, or no more than 5 branches/1,000 carbon atoms, as determined by Carbon 13 NMR.

A "porous linear polymer particle" ("porous LP particle") is a polymeric particle including a first linear polymer and at least one pore. The porous LP particle is selected from "porous linear mixed polarity polymer particle" and "porous linear non-polar polymer particle".

"Plural porous linear polymer particles" are a collection of two or more porous LP particles wherein the plural porous LP polymer particles have:

(i) an average particle diameter of at least 1 microns to no more than 1000 microns;
(ii) a total pore volume of at least 0.10 cc/g to no more than 9.00 cc/g, as measured by BET Nitrogen adsorption in cubic centimeters of pore volume per gram of the porous LP particles, for all pores having a diameter of 0.005 microns to 10 microns; and
(iii) a surface area of at least 10 square meters/g to no more than 1000 square meters/g, as measured by BET Nitrogen adsorption.

A "pore" is a space within a porous LP particle, wherein that space includes a "pore phase". A "pore phase" includes at least one "pore filling substance" other than the first linear polymer of the present invention. Typically the first linear polymer will form a portion or all of the boundaries ("pore walls") of the pores.

A "pore filling substance" may be a substance in a liquid, gaseous, solid, or supercritical state. There is no particular limitation on the pore filling substance, but typically the substance will be a monomer, a diluent, a gas such as air or nitrogen, or other substances found in the polymerization mixture, or introduced into the porous LP particles during isolation and storage and subsequent use.

A pore may have, as one of its functions, facilitation of transport of ingredients (e.g., ethylenically unsaturated monomers and catalytic components) from the outer surface of a porous LP particle to interior surfaces of that porous LP particle. A pore may be continuous (e.g., having a tubular form), may be in the form of a closed cell, an open cell, or a combination of continuous, closed cell, and open cell. When both the phase including the first linear polymer "first linear polymer phase" and the pore phase are continuous, these phases are said to be bicontinuous. When a pore is a "closed cell", that pore is completely surrounded by a different phase, wherein that different phase is, typically, the first linear polymer phase. When a pore is an "open cell", that open cell has at least one point of contact with another open cell, a continuous pore, or with an opening on the outer surface of the porous LP particle. A single open cell may have a single opening or multiple openings in its "cell wall", all of which may open into another open cell or continuous pore, may open onto the outer surface of the porous LP particle, or some openings may be into other open cells or continuous pores, while other openings of the same LP particle may open onto the outer surface of the LP particle.

A "porous linear mixed polarity polymer particle" ("porous LMPP particle") is a porous LP particle including a linear poly[(non-polar olefin)-(polar olefin)].

A "porous linear non-polar polymer particle" ("porous LNPP particle") is a porous LP particle including a linear poly(non-polar olefin).

The plural porous LP particles may further include a "catalytic component". The catalytic component of the present invention is capable of catalyzing, by coordination addition: the polymerization of a non-polar olefin to form a linear poly(non-polar olefin). The catalytic component is further capable of catalyzing the polymerization of a non-polar olefin and a polar olefin to form a linear poly[(non-polar olefin)-(polar olefin)]. The catalytic component includes an "organometallic complex". A porous LP particle including the catalytic component of the present invention is a "catalytic porous LP particle".

A "catalytic component" includes an "organometallic complex" capable of copolymering a non-polar olefin to form a poly(non-polar olefin) and a non-polar olefin and a polar olefin to produce a poly[(non-polar olefin)-(polar olefin)]. The "organometallic complex" includes a metal center, M, complexed with at least one ligand, wherein the at least one ligand has a structure according to Formula (I)

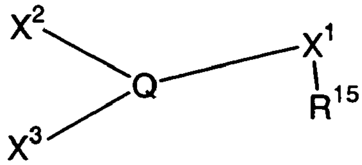

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$.

In some embodiments of the present invention, the catalyst component is prepared as a discrete organometalli complex according to Formula II

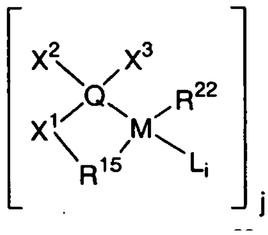

(II)

wherein j = 1 or 2; i = 0 or 1; and j + i = 2; wherein $R^{22}$ is selected from H and a hydrocarbyl radical; preferably $R^{22}$ is selected from H, a $C_{1-20}$ cyclic hydrocarbyl radical and a $C_{1-20}$ aliphatic hydrocarbyl radical; wherein L is a labile neutral electron donor ligand; and, wherein Q is selected from phosphorus and arsenic; wherein M is selected from Ni and Pd; wherein $R^{15}$ is selected from $-SO_3$, $-PO_3$, $-AsO_3$, and $-C(CF_3)_2O$; wherein $X^1$, $X^2$ and $X^3$ are as described *supra*; with the proviso that when j = 2; i = 0 and each $R^{15}$ is bound to both metal centers, M. In some aspects of these embodiments, L is selected from pyridine; substituted pyridines; nitrile (e.g., acetonitrile); substituted nitrile; ammonia; alkyl amines; substituted alkyl amines; aryl amines; substituted aryl amines; water; alkyl phosphines; substituted alkyl phosphines; aryl phosphines; substituted aryl phosphines; alkyl phosphites; substituted alkyl phosphites; aryl phosphites; substituted aryl phosphites; cyclic olefins (e.g., cyclooctadiene, cyclooctatetraene, norbornadiene and dicyclopentadiene); substituted cyclic olefins; aliphatic ethers; substituted aliphatic ethers; cyclic ethers; substituted cyclic ethers; acetates; substituted acetates; ketones and substituted ketones. In some aspects of these embodiments, L is selected from pyridine, substituted pyridines and ammonia. In some aspects of these embodiments, L is selected from pyridine and substituted pyridines.

Suitable organometallic complexes of the present invention may further have L selected from pyridine, substituted pyridines, and ammonia. A suitable metal atom, M, is a late transition metal selected from: Pd, Ni, Co, and Fe; Pd and Ni; Pd; and Ni. Suitable organometallic complexes are further neutral late transition metal complexes.

The term "labile neutral electron donor ligand" as used herein and in the appended claims refers to any ligand that is not strongly bound to the metal center, M, such that it is easily displaced from the metal center; and when separated from the metal center in its closed shell electron configuration exhibits a neutral charge.

Suitable catalytic components may further include an "activator component" capable of removing, or partially removing, a labile neutral electron donor ligand, L, from the metal atom, M, of the organometallic complex. Activator components useful in the present invention include organic borane compounds and inorganic borane compounds. Non-limiting examples of boron containing activator components of the present invention are trifluoroborane, triphenylborane, tris(4-fluorophenyl)borane, tris(3,5-difluorophenyl)borane, tris(4-fluoromethylphenyl)borane, tris(pentafluorophenyl)borane, tris(tolyl)borane, tris(3,5-dimethylphenyl)borane, tris(3,5-difluorophenyl)borane, tris(3,4,5-trifluorophenyl)borane. Both stoichiometric and non-stoichiometric quantities of activator components are usefully employed. Chemically and structurally useful boron compounds would be apparent to those skilled in the art based on their respective chemical structures and activities in olefin polymerizations. In the method of the present invention, the activator component is present in an amount of: at least 0.1 molar equivalent, at least 0.3 molar equivalent, at least 0.7 molar equivalent, or at least 1.0 molar equivalent, based on leaving group Y; and no more than 5,000 molar equivalent, no more than 500 molar equivalent, no more than 5 molar equivalent, or no more than 2 molar equivalents, based on leaving group Y.

A "branched coordination addition polymer" ("branched coordination polymer") is a polymer prepared by coordination polymerization, wherein the branched coordination polymer has more than 15 branches/1,000 carbon atoms,

as determined by Carbon 13 NMR. A branched coordination polymer may be a branched poly(non-polar olefin), a branched poly[(non-polar olefin)-(polar olefin)], or a combination thereof. If produced at all, a branched coordination polymer produced from first monomer is a "first branched coordination polymer". The definition of "first linear polymer" used herein does not include a first branched coordination polymer.

A "free radical addition polymer" ("free radical polymer") is a polymer prepared by free radical polymerization. A free radical polymer may be a poly(non-polar olefin), a poly(polar olefin), a poly[(non-polar olefin)-(polar olefin)], or a combination thereof. If produced at all, a free radical polymer produced from first monomer is a "first free radical polymer". The definition of first linear polymer used herein does not include a first free radical polymer.

A "second ethylenically unsaturated monomer" ("second monomer") is an ethylenically unsaturated monomer that is capable of being polymerized by coordination polymerization in the presence of plural porous linear polymer particles, wherein the porous LP particles include a catalytic component of the present invention, to produce a second linear polymer.

A "second linear polymer" is a linear coordination polymer including, as polymerized units, a second monomer. A second linear polymer is a polymer selected from a linear poly(non-polar olefin), a linear poly[(non-polar olefin)-(polar olefin)], and combinations thereof.

When a second monomer is polymerized in a "second polymerization" in the presence of a porous LP particle including a catalyst component, a "second linear polymer particle" ("second LP particle") is produced. A second LP particle includes the second linear polymer and the first linear polymer of the present invention.

If produced at all, a branched coordination polymer produced from second monomer is a "second branched coordination polymer". The definition of "second linear polymer" used herein does not include a second branched coordination polymer.

If produced at all, a free radical polymer produced from second monomer is a "second free radical polymer". The definition of "second linear polymer" used herein does not include a second free radical polymer.

A "free radical scavenger" is chemical compound, or other chemical moiety, capable of interacting with a free radical to eliminate that free radical through the formation of a covalent bond, or to otherwise render that free radical inactive.

An "oxygen enabled free radical scavenger" is a free radical scavenger which is capable of scavenging free radicals when oxygen in present, but is incapable of acting as a free radical scavenger in the absence of oxygen. An oxygen enabled free radical scavenger is capable of inhibiting free radical initiated polymerization, in the presence of molecular oxygen or compounds, including compounds derived from an ethylenically unsaturated monomer, which contain active oxygen moieties. An oxygen enabled free radical scavenger is, therefore, capable of inhibiting free radical initiated polymerization in the presence of molecular oxygen or compounds containing active oxygen moieties.

A "stable organic free radical" (also referred to herein as an "anaerobically active free radical scavenger" is a free radical scavenger which is an organic free radical compound, or other moiety, capable of effectively inhibiting the free radical initiated polymerization of unsaturated monomers, even in the absence of molecular oxygen or compounds, including compounds derived from an ethylenically unsaturated monomer, which contain active oxygen moieties. A stable organic free radical is capable of inhibiting free radical initiated polymerization (even in the absence of oxygen), and thereby capable of preventing the formation of a free radical addition polymer.

The term "ppm" means "parts per million" which, in turn, means "weight parts per million weight parts". "Parts per million" is a weight based measure. Therefore, the amount of a given component x in a composition y is calculated by dividing the weight of component x by the weight of composition y and then multiplying by one million. For example, if 0.002 gram of a stable organic free radical is present in a polymerizable composition containing 1000 grams of a polar monomer, the stable organic free radical is present at 2 ppm, based on the total weight of the polar monomer.

A "diluent" is a substance, usually selected from substances commonly known as solvents. A characteristic of a diluent for the first polymerization is that the first monomer is sufficiently soluble in the diluent to allow the first monomer to contact the catalyst component. A further characteristic of a diluent of the present invention is that the first linear polymer has low or no solubility in the diluent such that the first linear polymer precipitates from the diluent during or after its formation. A further characteristic of the diluent is that the diluent has low or no solubility in the first linear polymer at the temperature of the first polymerization such that the plural porous linear polymer particles retain their structure during and after formation. A characteristic of a diluent for the second polymerization is that the second monomer is sufficiently soluble in the diluent to allow the second monomer to contact the catalyst component. A further characteristic of a diluent for the second polymerization of the present invention is that the second linear polymer has low or no solubility in the diluent such that the second linear polymer precipitates from the diluent during or after its formation. A further characteristic of the diluent is that the diluent has low or no solubility in the second linear polymer at the temperature of the second polymerization such that the plural second linear polymer particles retain their structure during and after formation.

Representative examples of diluents of the present invention include, but are not limited to: low molecular weight linear and branched hydrocarbons (e.g., hexane and heptane), alicyclic hydrocarbons, (e.g., cyclohexane); aromatic hydrocarbons (e.g., toluene); and polar solvents esters of acetic acid (e.g., ethyl acetate). Additional suitable diluents are disclosed in U.S. Patent No. 7,087,687. One of skill in the art will recognized that, provided the solubility criteria are met regarding monomers utilized and coordination polymers produced during the first and second polymerization, combinations of the individual substances just enumerated may also be utilized as the diluent.

Molecular Weight. Synthetic polymers are almost always a mixture of chains varying in molecular weight, i.e., there is a "molecular weight distribution", abbreviated "MWD". For a homopolymer, members of the distribution differ in the number of monomer units which they contain. This way of describing a distribution of polymer chains also extends to copolymers. Given that there is a distribution of molecular weights, the most complete characterization of the molecular weight of a given sample is the determination of the entire molecular weight distribution. This characterization is obtained by separating the members of the distribution and then quantitating the amount of each that is present. Once this distribution is in hand, there are several summary statistics, or moments, which can be generated from it to characterize the molecular weight of the polymer.

The two most common moments of the distribution are the "weight average molecular weight", "$M_w$", and the "number average molecular weight", "$M_n$". These are defined as follows:

$$M_w = \Sigma(W_iM_i)/\Sigma W_i = \Sigma(N_iM_i^2)/\Sigma N_iM_i$$

$$M_n = \Sigma W_i/\Sigma(W_i/M_i) = \Sigma(N_iM_i)/\Sigma N_i$$

wherein:

$M_i$ = molar mass of $i^{th}$ component of distribution
$W_i$ = weight of $i^{th}$ component of distribution
$N_i$ = number of chains of $i^{th}$ component

and the summations are over all the components in the distribution. $M_w$ and $M_n$ are typically computed from the MWD as measured by Gel Permeation Chromatography (see the Experimental Section).

"Particle size" is the diameter of a particle. The "average particle size" determined for a collection of particles (e.g., fragmentation domains) is the "weight average particle size", "$d_w$", as measured by Capillary Hydrodynamic Fractionation technique using a Matec CHDF 2000 particle size analyzer equipped with a HPLC type Ultra-violet detector. The term "particle size distribution" and the acronym "PSD" are used interchangeably herein. "Polydispersity" is used in the art as a measure of the breadth of the PSD. Used herein, "polydispersity" is a description of the distribution of particle sizes for a plurality of particles. As such, "polydispersity" and "PSD polydispersity" are used interchangeably. PSD polydispersity is calculated from the weight average particle size, $d_w$, and the number average particle size, $d_n$, according to the formulae:

$$\text{PSD Polydispersity} = (d_w)/(d_n),$$

wherein

$$d_n = \Sigma n_i d_i / \Sigma n_i,$$

and

$$d_w = \Sigma n_i d_i d_i / \Sigma n_i d_i,$$

and

$n_i$ is the number of particles having the particle size $d_i$.

Particle size and particle size distribution may also be estimated by measuring particle diameter as imaged using a Field Emission Scanning Electron Microscope ("FESEM"). The aspect ratio for an individual porous LP particle may also be estimated in this way wherein the "aspect ratio" is the ratio of the longest axis of the particle to the shortest axis of the particle. The "average aspect ratio" for a collection of porous LP particles is the average of those individual aspect ratios. Similarly, estimation of particle size, particle size distribution, and aspect ratio may be accomplished for second LP particles.

Estimation of whether a polymer and another component (e.g., another polymer or low molecular weight substance) will be miscible may be made according to the well-known methods delineated in D. W. Van Krevelen, Properties of Polymers, 3rd Edition, Elsevier, pp. 189-225, 1990. For example, Van Krevelen defines the total solubility parameter ($\delta_t$) for a substance by:

$$\delta_t^2 = \delta_d^2 + \delta_p^2 + \delta_h^2,$$

wherein $\delta_d$, $\delta_p$, and $\delta_h$ are the dispersive, polar, and hydrogen bonding components of the solubility parameter, respectively. Values for $\delta_d$, $\delta_p$, and $\delta_h$ have been determined for many diluents, monomers, polymers, and polymer segments, and can be estimated using the group contribution methods of Van Krevelen. For example, to estimate whether a polymer having a given composition will be miscible with a given solvent, one calculates $\delta_t^2$ for the polymer and $\delta_t^2$ for the solvent. Typically, if the difference between the two, $\Delta\delta_t^2$, is greater than 25 (i.e., the absolute value of $\Delta\delta_t > 5$), then the polymer and the solvent will not be miscible. These calculations are particularly useful for predicting how a particular solvent will behave as a diluent during formation of the first linear polymer of the present invention. When it is desired to form plural porous LP particles by polymerization induced phase separation ("PIPS") catalyzed by the catalytic component, the first monomer should be soluble in the diluent at polymerization reaction concentrations, yet all, or most of the first linear polymer produced must be insoluble in that diluent. If $\Delta\delta_t^2$ is less than 25 (i.e., the absolute value of $\Delta\delta_t < 5$) for a given first monomer and diluent, that monomer and diluent should be miscible, fulfilling the criterion for the monomer. If $\Delta\delta_t^2$, is greater than 25 (i.e., the absolute value of $\Delta\delta_t > 5$) for a given first linear polymer and diluent, that first linear polymer and diluent should be immiscible, fulfilling the criterion for the first linear polymer. It will, of course, be recognized that the predictive power of the van Krevelen calculations is not absolute. For first linear polymer/diluent combinations, values for $\Delta\delta_t^2$ as low as 9 to 25 (i.e., absolute values of $\Delta\delta_t$ = 3 to 5) may indicate immiscibility, a condition that may become increasingly likely as the molecular weight of the first linear polymer increases.

When it is desired to prepare well-defined porous linear polymer particles that retain their external shape and internal structure during and after formation, selection of diluent may be influenced by such factors as the temperature of polymerization contemplated, the temperature of the first linear polymer which precipitates from the diluent during or after its formation, and the solubility of the contemplated diluent in the first linear polymer. The extent of solubility of a given diluent in a given first linear polymer will influence the structural integrity of the first linear polymer phase, and hence the pore phase, of the porous LP particle during and after its formation. The extent of solubility of that diluent in that first linear polymer will further influence the extent to which individual porous LP particles will stick together. High levels of diluent imbibed into the first linear polymer may, therefore, lead to clumping of porous LP particles to form agglomerates having reduced or nonexistent porosity, or even intractable masses. High levels of diluent imbibed into the first linear polymer may, in extreme cases, lead to failure of discrete porous LP particles to form at all.

It is therefore, desirable to select a first linear polymer and diluent which are immiscible, or which have very low solubility in one another at and below the polymerization temperature. The first linear polymer including any imbibed diluent must be below the "critical softening temperature" for that first linear polymer so that porous LP particles can both form initially and have the structural integrity to retain their structure throughout polymerization, any hold periods at elevated temperature, and during storage and further use. The term "critical softening temperature" is used herein in reference to the first polymer phase of the porous linear polymer particles of the present invention. The "critical softening temperature" may be determined for a given porous LP particle, or collection of porous LP particles, by microscopically observing pore structure of those particles by FESEM after heating in a given diluent with stirring for an hour a at various temperatures. The critical softening temperature is the temperature at which structure begins to be lost and/or the particles begin to stick together.

Based on the foregoing discussion of the desired immiscibility of the first linear polymer and the diluent of the present invention, the difference, $\Delta\delta_t^2$ for a pairing of a first linear polymer and a diluent should, typically, be at least 9, at least 16, or at least 25; and no more than, using values of $\delta_t$ calculated using the van Krevelen method.

Other sources of miscibility information include Olabisi et al., Polymer-Polymer Miscibility, Academic Press, NY, 1979; Coleman et al., Specific Interactions and the Miscibility of Polymer Blends, Technomic, 1991; and A. F. M. Barton, CRC Handbook of Solubility Parameters and Other Cohesion Parameters, 2nd Ed., CRC Press, 1991.

The solubility of the first linear polymer in the diluent, at 25 °C, is at least 0 millimoles/liter, at least 20 millimoles/liter, or at least 50 millimoles/liter; and no more than 500 millimoles/liter, no more than 250 millimoles/liter, or no more than 100 millimoles/liter, wherein millimoles are calculated as millimoles of first monomer present, as polymerized units, in the first linear polymer and liter refers to a liter of diluent. The highest value (500 millimoles/liter) corresponds to from about 2 percent by weight when based upon ethylene present as polymerized units, and about 6 percent by weight when based upon methyl acrylate as polymerized units. It is recognized that first linear polymer solubilities above 2 percent by weight may still allow formation of well-defined porous LP particles, provided that the soluble first linear polymer does not interfere with initial formation of the porous LP particles or with maintenance of the structural integrity of those particles once formed. However, it is typically desirable that the amount of first linear polymer soluble in the diluent at 50 °C be no more than 2 percent by weight, based on the weight of diluent.

The solubility of the first monomer in the diluent of the present invention, at the polymerization temperature, is at least 1 millimoles/liter, at least 20 millimoles/liter, or at least 50 millimoles/liter, wherein millimoles are millimoles of first monomer and liter refers to a liter of diluent. There is no particular upper limit to the solubility of the first monomer in the diluent. The first monomer and diluent may, in fact, be miscible in all proportions. Typically, a diluent is present during each of the first polymerization and the, optional, second polymerization of the present reaction. In an alternative suitable case, the monomer is used as both a reactant and a carrier, absent diluent. In such case, the first monomer is considered to be a diluent and the number of millimoles of first monomer / liter of diluent (that is, the monomer itself) at the polymerization temperature is equal to the number of millimoles of first monomer in a liter of first monomer at the polymerization temperature.

The solubility of the diluent in the first linear polymer of the porous LP particles, at the polymerization temperature, is at least 0, at least 0.05, or at least 0.1 percent by weight; and no more than 10, no more than 5, no more than 1, no more than 0.5, or no more than 0.2 percent by weight, based on the weight of the first linear polymer included in the porous LP particles.

One of skill in the art will recognize that the first linear polymer of the present invention may be fully amorphous or semi-crystalline. A "semi-crystalline first linear polymer" will, typically have an "amorphous first linear polymer phase", exhibiting a glass transition temperature and a "crystalline first linear polymer phase", exhibit a melting point.

The first linear polymer of the present invention may be a linear poly(non-polar olefin), in which case the molar ratio of non-polar olefin to polar olefin, present as polymerized units in the linear poly(non-polar olefin), is by definition 100:0. The first linear polymer of the present invention may further be a linear poly[(non-polar olefin)-(polar olefin)], wherein the molar ratio of non-polar olefin to polar olefin, present as polymerized units in the linear poly[(non-polar olefin)-(polar olefin)], is: at least 80:20, at least 85:15, at least 90:10, or at least 95:5 mol/mol; and no more than 99.95:0.05, no more than 99.8:0.2, no more than 99.5:0.5, or no more than 98:2 mol/mol. The weight average molecular weight, $M_w$, of the first linear polymer is: at least 500, at least 1,000, at least 10,000, or at least 20,000; and no more than 5,000,000, no more than 1,000,000, no more than 200,000 grams/mole of first linear polymer. The number average molecular weight, $M_n$, of the first linear polymer is: at least 500, at least 1,000, at least 10,000, or at least 20,000; and no more than 5,000,000, no more than 1,000,000, no more than 200,000 grams/mole of first linear polymer. The polydispersity of the molecular weight distribution (MWD), equal to $M_w/M_n$ is: at least 1.00, at least 1.01, or at least 1.1, and no more than 10, no more than 3.0, no more than 1.5, or no more than 1.3. It is further recognized that the molecular weight distribution can be unimodal or multimodal (e.g., bimodal, trimodal). When the molecular weight distribution is multimodal, the polydispersity of the individual modes is: at least 1.00, at least 1.01, or at least 1.1, and no more than 10, no more than 3.0, no more than 1.5, or no more than 1.3.

The plural porous LP particles (alternatively "first LP particles") of the present invention can be made, for example, by combining a first monomer, a diluent, a catalytic component (including an organometallic complex and, optionally an activator component), and optionally a free radical scavenger and heating to the desired polymerization temperature with stirring. Typically, the first polymerization is carried out in an inert atmosphere free of water and free of oxygen. However, often of the catalytic component of the present invention is not degraded by oxygen and/or water when these are present in the reactor atmosphere. If the first polymerization is to be carried out in the presence of oxygen, it is a necessary that the catalytic component not be degraded by the oxygen containing atmosphere. As stated *supra* the diluent is selected such that the first linear polymer is not soluble, or only sparingly soluble in that diluent at the polymerization temperature (and any hold temperatures) such that the first linear polymer forms at or below its critical softening temperature, thus maintaining the structure of the porous LP particles during and after their formation. Provided, this relationship of diluent to first linear polymer is adhered to, the polymerization temperature may be any temperature at which the catalyst component is active. Typically, the polymerization temperature is at least 30, at least 50, or at least 60°C; and no more than 150, no more than 120, no more than 100 °C. The pressure for the first polymerization will vary according to catalyst component activity and first monomers chosen. Typically, gaseous first monomers such as ethylene require elevated pressures. First polymerization pressures are: at least 0.01, at least 0.10, at least 0.50, or at least 1.0 atmospheres; and no more than 1,000, no more than 100, no more than 10, or no more than 5 atmosphere.

Non-limiting examples of the organometallic complex of the catalytic component of the present invention include:

discrete organometallic complexes according to Formula II, wherein the organometallic complexes are monometallic, such as

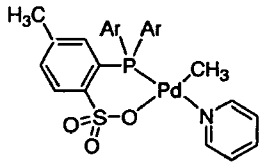

Ar = 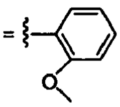

j = 1, i = 1; M = Pd; $R^{22} = CH_3$; L = $NC_5H_5$; Q = P; $X^2 = X^3$ = Ar;

$X^1$ = 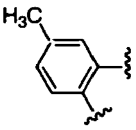 ;

$R^{15} = -SO_3$; and discrete organometallic complexes according to Formula II, wherein the organometallic complexes are dimmers including two metal centers, such as

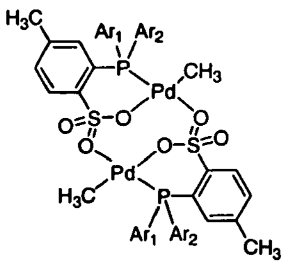

Ar = 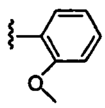

$Ar_2$ = 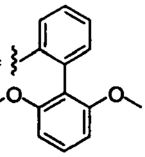

j = 2, i = 0; M = Pd; $R^{22} = CH_3$; Q = P; $X^2 = Ar_1$; $X^3 = Ar_2$;

$X^1$ = 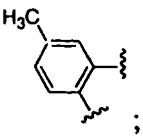 ;

$R^{15} = -SO_3$.

The first non-polar monomer of the present invention is selected from ethylene, a $C_2$-$C_{20}$ acyclic aliphatic olefin, and combinations thereof. A suitable non-polar monomer may further be ethylene.

A first non-polar monomer of the present invention may further be a non-polar norbornene-type monomer, with the proviso that the non-polar norbornene-type monomer is polymerized with other non-polar monomers to form a poly (non-polar olefin) and that the non-polar norbornene-type monomer is not polymerized with a polar olefin. The term "non-polar norbornene-type monomer", as used herein, encompasses norbornenes and higher cyclic derivatives of norbornene that are substituted with a non-polar substituent selected from: $C_1$-$C_{20}$ alkyl group, aryl group, alkaryl group, and combinations thereof.

The first polar monomer of the present invention is represented by Formula III

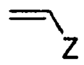

(III)

wherein Z is selected from an aromatic hydrocarbyl group, -OY, -COY and -$CO_2$Y; where Y is selected from hydrogen and $R^{19}$; where $R^{19}$ is selected from a hydrocarbyl group, an aromatic hydrocarbyl group and derivatives thereof.

The first polar monomer of the present invention may be an acrylate monomer. Acrylate monomers include, for example: $C_1$-$C_{22}$ linear or branched chain alkyl acrylates, bornyl acrylate, and isobornyl acrylate; hydroxyethyl acrylate, hydroxypropyl acrylate; epoxy containing acrylates such as glycidyl acrylate; acrylic acid; styrene or substituted styrenes; butadiene.

Suitable fluorinated acrylic monomers useful in the present invention include, but are not limited to: fluoroalkyl acrylate; fluoroalkylpropyl acrylate; ω-H-perfluoroalkanediol diacrylate; and β-substituted fluoroalkyl acrylate. The fluoroalkyl groups used as substituents have from 1 to 20 carbon atoms and the fluoroalkyl groups may be mono-, di, tri, or tetra-fluorinated, or contain any number of fluoro-atoms, up to and including perfluorinated compositions.

The first polar monomer of the present invention may be a vinyl ether monomer. An illustrative, non-exhaustive list of vinyl ethers includes: methyl vinyl ether, ethyl vinyl ether, propyl vinyl ether, isopropyl vinyl ether, n-butyl vinyl ether, 2-ethylhexyl vinyl ether, stearyl vinyl ether, 3-(ethenyloxy)-1-propanol, 1,4-butanediol monovinyl ether, 2-methoxyethyl vinyl ether, triethylene glycol vinyl ether, 2-(hydroxyethoxy)ethyl vinyl ether, 3,6,9,12,15-pentaoxaheptadec-1-ene, octadecanoic acid 4-(ethenyloxy)butyl ester, trifluoroethyl vinyl ether, cyclohexyl vinyl ether, 2-[(ethenyloxy)methoxy]-2-methyl-tricyclo[3.3.1.13,7]decane, 2-methyl-4-(vinyloxymethyl)-1,3-dioxolane, 2-(vinyloxy)tetrahydropyran, 2-morpholinoethyl vinyl ether, 5-(ethenyloxy)-1,3-benzenediol, 4-(ethenyloxy)-1,2-benzenedicarbonitrile, 4-(ethenyloxy)-benzenesulfonamide, 2-(ethenyloxy)-benzenesulfonamide, 2-(ethenyloxy)-benzenemethanol, 4-(ethenyloxy)-pyridine, p-cumenyl vinyl ether, phenyl vinyl ether, diethyl-phosphoramidous acid divinyl ester, 2,5-bis[[4-(ethenyloxy)butyl]amino]-2,5-cyclohexadiene-1,4-dione, and 9-[2-[2-(ethenyloxy)ethoxy]ethyl]-9H-carbazole.

The first polar monomer of the present invention may also be a vinyl ketone monomer. An illustrative, non-exhaustive list of vinyl ketones includes: 1-pentadecen-3-one, 1-hepten-3-one, 1-decen-3-one, 3-buten-2-one, 1-nonadecen-3-one, 1-octen-3-one, 1-hepten-3-one, 1-hexen-3-one, I-penten-3-one, and 1-phenyl-2-propen-1-one.

The first polar monomer of the present invention may further be an N-vinyl monomer having Formula (IV):

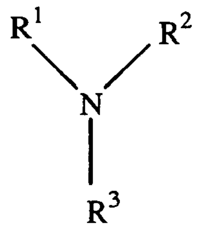

(IV)

wherein

$R^1$ is selected from -C=C, and -C(O)-C=C;
$R^2$ and $R^3$ are independently selected from H, an alkyl group, an alkenyl group, an alkynyl group, an aryl group, a biphenyl group, a carboxylate group, a carboxyalkyl group, a carboxyarylalkyl group, an alkoxy group, an alkenyloxy group, an alkynyloxy group, an aryloxy group, an alkoxycarbonyl group, and derivatives thereof;
wherein $R^2$ and $R^3$ may optionally be combined to form a cyclic or multi-cyclic structure;
with the proviso that $R^2$ and $R^3$ are not both H and with the proviso that the first monomer according to Formula IV is not N-vinylimidazole.

Suitable N-vinyl monomers having Formula IV have $R^2$ and $R^3$ equal to H, a $C_{1-20}$ alkyl group, a $C_{2-20}$ alkenyl group, a $C_{2-20}$ alkynyl group, an aryl group, a biphenyl group, a $C_{1-20}$ carboxylate group, a $C_{1-20}$ carboxyalkyl group, a $C_{1-20}$ carboxyarylalkyl group, a $C_{1-20}$ alkoxy group, a $C_{2-20}$ alkenyloxy group, a $C_{2-20}$ alkynyloxy group, an aryloxy group, a $C_{2-20}$ alkoxycarbonyl group, and derivatives thereof. Further suitable N-vinyl monomers having Formula IV have and $R^3$ equal to H, a $C_{1-20}$ alkyl group and a $C_{1-20}$ carboxyalkyl group; alternatively H and a $C_{1-20}$ alkyl group.

Other suitable N-vinyl monomers having Formula IV have $R^1$ equal to -C=C, and $R^2$ and $R^3$ combine to form a cyclic or multi-cyclic structure. In one aspect of that suitable N-vinyl monomer, the N-vinyl monomer is selected from N-vinyldihydrocarbylamines. In another aspect, the N-vinyl monomer according to Formula IV is selected from N-vinylcarbazole and N-vinylphthalimide.

Yet other suitable N-vinyl monomers having Formula IV have $R^1$ equal to -C=C; $R^2$ is a carboxyalkyl group, alternatively a $C_{1-20}$ carboxyalkyl group, alternatively a $C_{1-3}$ carboxyalkyl group; and $R^3$ is an alkyl group, alternatively a $C_{1-20}$ alkyl group; alternatively a $C_{1-3}$ alkyl group. In some aspects of these other suitable N-vinyl monomers, $R^2$ and $R^3$ may optionally be combined to form a cyclic or multi-cyclic structure. In some aspects, the monomer according to Formula IV is selected from vinylacetamides. In some aspects, the monomer according to Formula IV is selected from N-vinylpyrrolidone, N-methylvinylacetamide and N-vinylcaprolactam.

Still other suitable N-vinyl monomers having Formula IV have $R^1$ equal to -C(O)-C=C. In some aspects of these embodiments, the at least one monomer according to Formula IV is an acrylamide.

Suitable N-vinyl monomers having Formula IV may further be selected from N-vinylformamide; N-vinylacetamide; N-vinylphthalimide; N-methylvinylacetamide; N-vinylcaprolactam; 5-ethyl-5-methyl-3-vinylhydantoin; N-vinylpyrrolidone; 5-methyl-5-phenyl-3-vinylhydantoin; N-vinylcarbazole; N,N-dimethyl acrylamide; and 5-pentamethylene-3-vinylhydantoin.

The first polar monomer of the present invention may be a polar norbornene-type monomer. The term "polar norbornene-type monomer", as used herein, encompasses norbornenes and higher cyclic derivatives of norbornene that are substituted with a polar group. A suitable polar norbornene-type monomer may be a monomer including a norbornene structure and at least one functional group containing an oxygen atom. An illustrative, non-exhaustive, list of polar norbornene-type monomers is shown below:

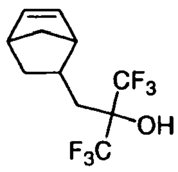
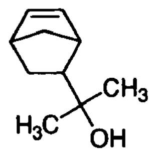
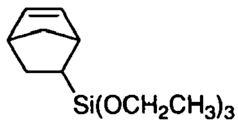

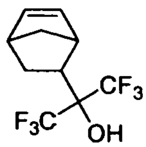
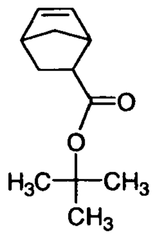
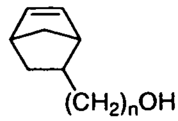
n = 1,2,3,...24
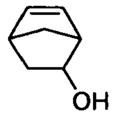

.

The second monomer of the present invention may be any monomer which is a first monomer of the present invention, meaning that a second non-polar monomer may be any non-polar monomer which is a first non-polar monomer, and a second polar monomer may be any polar monomer which is a first non-polar monomer. The second monomer may be the same as the first monomer or different. That is, the second monomer polymerized in the presence of a porous LP particle may be the same as, or different from, the first monomer polymerized to form that porous LP particle.

The plural porous linear polymer particles (alternatively, "first porous LP particles"; "first LP particles") of the present invention have an average particle diameter of: at least 1, at least 5, at least 10, or at least 20 microns; and no more than 1000, no more than 500, no more than 200, or no more than 100 microns. The plural porous LP particles have a PSD polydispersity of: at least 1.000, at least 1.001, at least 1.01, at least 1.05, or at least 1.1, and no more than 20, no more than 10, no more than 5, no more than 3, or no more than 2. Suitable plural porous LP particle further have a PSD polydipersity of: at least 1.01, at least 1.05, or at least 1.1; and no more than 3, no more than 2, no more than 1.5, or no more than 1.3. The plural porous LP particles have a total pore volume of: at least 0.10, at least 0.30, at .east 0.50, or at least 1.00 cc/g; and no more than 9.00, no more than 4.00, no more than 3.00, or no more than 2.50 cc/g to no more than 9.00 cc/g, as measured by BET Nitrogen adsorption in cubic centimeters of pore volume per gram of the porous LP particles, for all pores having a diameter of 0.005 microns to 10 microns. The plural porous LP particles have an average pore size of: at least 0.005, at least 0.01, or at least 0.02microns; and no more than 10, no more than 2, no more than 1, or no more than 0.50 microns. The plural porous LP particles have a surface area of: at least 1, at least 10, at least 50, at least 100, or at least 200 square meters/g; and no more than 1,000, no more than 800, no more than 600, or no more than 400 square meters/g, as measured by BET Nitrogen adsorption. The plural porous LP particles have an average aspect ratio of at least 1.0, at least 1.05, at least 1.2; and no more than10:1, no more than 5:1, no more than 3:1, or no more than 2:1, wherein the aspect ratio of an individual porous LP particle is the ratio of the longest

axis of the particle to the shortest axis of the particle as determined by FESEM ("Field Emission Scanning Electron Microscopy"). The plural porous LP particles have a bulk density of: at least 0.05, at least 0.12, greater than 0.24, or at least 0.30; and no more than 0.75, no more than 0.60, or no more than 0.50 g/cc, based on the weight of a known volume of isolated plural porous LP particles, dried to constant weight.

Plural porous LP particles may further include residual catalytic component (i.e., they may be "catalytic porous LP particles"). One of skill in the art will understand that the plural porous LP particles may contain a level of catalytic component that is equal to or less than the level that would be expected based upon the amount of catalytic component used to catalyze the polymerization of first monomer to form those plural porous LP particles. Lower than predicted levels of catalytic component in the plural porous LP particles may, for example, be attributed to degradation of the catalytic component or purification of the porous LP particles.

The first linear polymer and the second linear polymer of the present invention may be the same of different. The ranges for Mw, Mn, polydispersity of the molecular weight distribution, linearity, and molar ratio of non-polar olefin to polar olefin for the second linear polymer have the same ranges as set forth *supra* for the first linear polymer.

Plural second LP particles may further include residual catalytic component. One of skill in the art will understand that the plural second LP particles may contain a level of catalytic component that is equal to or less than the level that would be expected based upon the amount of catalytic component present in the plural porous LP particles and any additional catalytic component added before or during the second polymerization. Lower than predicted levels of catalytic component in the plural second LP particles may, for example, be attributed to degradation of the catalytic component or purification of the second LP particles. The plural second LP particles may be porous, or non-porous. When the second LP particles are porous, the characteristics of those second LP particles are the similar to those of the porous LP particle from which it was made. When the second LP particles are non-porous, or substantially non-porous, values for measurements of pores will approach zero. Therefore, the second LP particles have a total pore volume of: at least 0, at least 0.10, at least 0.30, at east 0.50, or at least 1.00 cc/g; and no more than 9.00, no more than 4.00, no more than 3.00, or no more than 2.50 cc/g to no more than 9.00 cc/g, as measured by BET Nitrogen adsorption in cubic centimeters of pore volume per gram of the porous LP particles, for all pores having a diameter of 0.005 microns to 10 microns. The plural second LP particles have an average pore size of: at least 0.005, at least 0.01, or at least 0.02microns; and no more than 10, no more than 2, no more than 1, or no more than 0.50 microns. As the pore volume of the plural second LP particles goes to zero, the surface area of those second LP particles approaches their exterior surface area. Therefore, plural second LP particles have a surface area of: at least 0.0005, at least 0.01, at least 1, at least 10, at least 50, or at least 100 square meters/g; and no more than 1,000, no more than 800, no more than 600, or no more than 400 square meters/g, as measured by BET Nitrogen adsorption.

The second LP particles typically have sizes at least as great as the porous LP particles used in their preparation. Therefore, the plural second LP particles have an average particle diameter of: at least 1, at least 5, at least 10, or at least 20 microns; and no more than 10,000, no more than 1000, no more than 500, no more than 200, or no more than 100 microns. It will, further, be recognized that it is possible to make second LP particles having an average particle diameter in excess of 10,000 microns (i.e., 10 millimeters), although this is typically not done in current commercial practive. The porous LP particles act as the locus of polymerization for the second polymerization, resulting the PSD polydispersity of the plural second LP particles being similar to the PSD polydispersity of the plural porous LP particles used to prepare them. Therefore, the plural second LP particles have a PSD polydispersity of: at least 1.000, at least 1.001, at least 1.01, at least 1.05, or at least 1.1, and no more than 20, no more than 10, no more than 5, no more than 3, or no more than 2. Suitable plural second LP particle further have a PSD polydipersity of: at least 1.01, at least 1.05, or at least 1.1; and no more than 3, no more than 2, no more than 1.5, or no more than 1.3. The plural second LP particles have an average aspect ratio of at least 1.0, at least 1.05, at least 1.2; and no more than10:1, no more than 5:1, no more than 3:1, or no more than 2:1, wherein the aspect ratio of an individual porous LP particle is the ratio of the longest axis of the particle to the shortest axis of the particle as determined by FESEM ("Field Emission Scanning Electron Microscopy").

The second LP particles may have lower pore volume than the porous LP particles used in making them. In such case, the interior density of individual second LP particles increases relative to the interior density of the porous LP particles from which they were made, leading to a higher upper limit from ranges of plural second LP particle bulk density. Bulk densities may be even higher for particle sized distributions that are multimodal due to opportunity for increased packing volume for packed multimodal particles. Therefore, the plural second LP particles have a bulk density of: at least 0.05, at least 0.12, greater than 0.24, or at least 0.30; at least 0.40; and no more than 0.85, no more than 0.75, no more than 0.60, or no more than 0.50 g/cc, based on the weight of a known volume of isolated plural porous LP particles, dried to constant weight.

The plural second LP particles of the present invention can be made, for example, by combining a second monomer, plural porous LP particles (i.e., first LP particles), a diluent, optionally additional catalytic component and optionally a free radical scavenger and heating to the desired polymerization temperature with stirring. Typically, the second polymerization is carried out in an inert atmosphere free of water and free of oxygen. However, often of the

catalytic component of the present invention is not degraded by oxygen and/or water when these are present in the reactor atmosphere. If the seond polymerization is to be carried out in the presence of oxygen, it is necessary that the a catalytic component is chosen which is not degraded by the oxygen containing atmosphere. As stated *supra* the diluent is selected such that the first linear polymer is not soluble, or only sparingly soluble in that diluent at the polymerization temperature (and any hold temperatures) and such that the second linear polymer preferably also not soluble, or only sparingly soluble in that diluent at the polymerization temperature (and any hold temperatures). Provided, this relationship of diluent to first linear polymer, and preferably to the second linear polymer, is adhered to, the polymerization temperature may be any temperature at which the catalyst component is active. Typically, the second polymerization temperature is at least 30, at least 50, or at least 60°C; and no more than 150, no more than 120, no more than 100 °C. The pressure for the second polymerization will vary according to catalyst component activity and second monomers chosen. Typically, gaseous second monomers such as ethylene require elevated pressures. second polymerization pressures are: at least 0.01, at least 0.10, at least 0.50, or at least 1.0 atmospheres; and no more than 1,000, no more than 100, no more than 10, or no more than 5 atmosphere.

It is desirable that the first polymer of the present invention be formed without also preparing free radical polymer, and that the resulting porous LP particles be free of, or contain low levels of free radical polymer. Although suitable methods of the present invention for forming the porous LP particles yield those particles absent, or substantially free of, free radical polymer without inclusion of an addition component or procedure, it may be desirable include a free radical scavenger during the first polymerization.

When the free radical scavenger of the present invention is an oxygen enabled free radical scavenger, it may be any chemical compound or chemical moiety capable of inhibiting a free radical in the presence of oxygen but incapable of doing so in the absence of oxygen. Oxygen enabled free radical scavengers include, for example, aromatic monohydroxy compounds shielded by bulky groups, such as phenols which have at least one bulky group in a vicinal position relative to the OH group. Suitable oxygen enabled free radical scavengers are disclosed in U.S. Pat. No. 4,360,617. Suitable phenolic compounds include, for example, alkylphenols, hydroxyphenylpropionates, aminophenols, bisphenols, and alkylidenebisphenols. A further group of suitable phenols is derived from substituted benzocarboxylic acids, in particular from substituted benzopropionic acids.

Examples of stearically hindered phenols are bis(2,6-tert-butyl)-4-methylphenol ("BHT"), 4-methoxymethyl-2,6-di-tert-butylphenol, 2,6-di-tert-butyl-4-hydroxymethylphenol, 1,3,5-trimethyl-2,4,6-tris(3,5-di-tert-butyl-4-hydroxybenzyl)-benzene, 4,4'-methylenebis(2,6-di-tert-butylphenol), 2,4-di-tert-butylphenyl 3,5-di-tert-butyl-4-hydroxybenzoate, 2,2-bis(4-hydroxyphenylpropane(bisphenol A), 4,4'-dihydroxybiphenyl ("DOD"), 2,2'-methylenebis(4-methyl-6-tert-butylphenol), 1,6-hexanediol bis-3-(3,5-di-tert-butyl-4-hydroxyphenyl)propionate), octadecyl 3-(3,5-bis(tert-butyl)-4-hydroxyphenyl)propionate, 3,5-di-tert-butyl-4-hydroxybenzyldimethylamine, 2,6,6-trioxy-1-phosphabicyclo(2.2.2)oct-4-ylmethyl 3,5-ditert-butyl-4-hydroxyhydrocinnamate, and N,N'-hexamethylenebis-3,5-di-tert-butyl-4-hydroxyhydrocinnamide. A group of suitable stearically hindered phenols includes bis(2,6-(C1-C10-alkyl)-4-(C1-C10-alkyl)phenols. Another set of suitable stearically hindered phenols includes bis(2,6-tert-butyl)-4-methylphenol and bis(2,6-methyl)-4-methylphenol. A suitable stearically hindered phenol is bis(2,6-tert-butyl)-4-methylphenol.

When the free radical scavenger of the present invention is a stable organic free radical, that stable organic free radical is, typically, a "delocalized free radical" or a "persistent free radical". A "delocalized free radical" is an organic free radical that participates in a conjugated $\pi$-electron system. An example of such a delocalized free radical is that derived from $\alpha$-tocopherol (vitamin E). The extent of delocalization in these system varies from extensive to slight. In fact, there are many heterocyclic thiazyl radicals which show remarkable kinetic and thermodynamic stability, yet display $\pi$ resonance stabilization (i.e., delocalization) to only a limited extent [Oakley, R.T. Prog. Inorg. Chem. 1998, 36, 299; Banister, A.J., et al. Adv. Hetero. Chem. 1995, 62,137].

"Persistent free radicals" derive their stability from steric crowding around the radical center, crowding which makes it physically difficult for the free radical to react with another molecule. Examples of persistent free radicals include Gomberg's radical (triphenylmethyl), Fremy's salt (Potassium nitrosodisulfonate, $(KSO_3)_2NO\cdot$), hindered nitroxides having the general formula $R_2NO\cdot$, such as TEMPO, verdazyls, nitronyl nitroxides, and azephenylenyls.

Illustrative examples of suitable delocalized free radicals of the present invention include delocalized free radicals having structures according to Formula V:

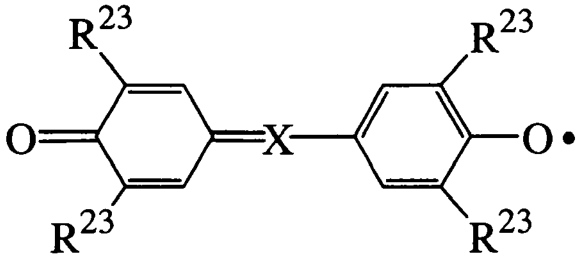

(V),

wherein each $R^{23}$ is, independently, a tertiary alkyl group having 4 to 7 carbon atoms and X is CH or N. Illustrative tertiary alkyl groups include t-butyl and 3-ethyl-3-pentyl. Illustrative examples of delocalized free radicals represented by Formula V include: galvinoxyl, wherein $R^{23}$ is t-butyl and X is CH; azagalvinoxyl, wherein $R^{23}$ is t-butyl and X is N; and combinations thereof. One of skill in the art will recognize that Formula V is a representation of the actual molecular structure of galvinoxyl, azagalvinoxyl, and related delocalized free radicals. The actual molecular structure of the free radical is a hybrid structure in which the unpaired electron is delocalized over the molecule. It should be understood, therefore, that Formula V is a convenient shorthand way to represent the molecular structure of this type of delocalized free radical.

Suitable persistent free radicals include "sterically hindered nitroxyl free radicals" (interchangeably referred to as: "sterically hindered N-oxyl free radical") having structures according to Formula VI:

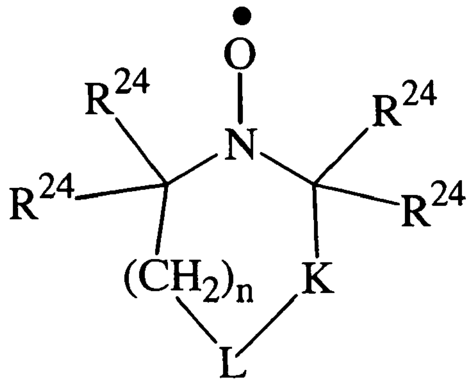

(VI)

wherein K is selected from $CH_2$ and O; wherein L is selected from $CH_2$, C=O, CHOH, $CHOP(=O)(OH)_2$, $CHOC(=O)R^{25}$ where $R^{25}$ is selected from C1-C20 linear, branched, or cyclic alkyl, and $CHR^{26}$ where $R^{26}$ is a polymer chain fragment; wherein n = 0 or 1; and wherein each $R^{24}$ is independently selected from: C1-C20 linear, branched, or cyclic alkyl; substitued C1-C20 alkyl; phenyl; substituted phenyl; and a polymer chain fragment. Suitable sterically hindered N-oxly free radicals having structures according to Formula VI are further those structures wherein K is $CH_2$; wherein L is selected from $CH_2$, C=O, CHOH, and $CHOP(=O)(OH)_2$; wherein n = 0 or 1; and wherein each $R^{24}$ is independently selected from: methyl and phenyl; phenyl; or methyl. Suitable sterically hindered N-oxly free radicals having structures according to Formula VI are still further those structures wherein K is $CH_2$; wherein L is $CH_2$; wherein n = 0 or 1; and wherein each $R^{24}$ is methyl. A suitable sterically hindered N-oxly free radical having a structure according to Formula VI is further a structure wherein K is $CH_2$; wherein L is $CH_2$; wherein n = 1; and wherein each $R^{24}$ is methyl.

Illustrative examples of suitable sterically hindered N-oxyl free radicals include: 2,2,6,6-tetraalkyl-1-piperidin-N-oxyl free radicals such as 2,2,6,6-tetramethyl-1-piperidin-N-oxyl free radical ("TEMPO"), 4-oxo-2,2,6,6-tetramethyl-1-piperidin-N-oxyl free radical ("4-oxo-TEMPO"), 4-hydroxy-2,2,6,6-tetramethyl-1-piperidin-N-oxyl free radical ("4-hydroxy-TEMPO"), 4-phosphonoxy-2,2,6,6-tetramethyl-1-piperidin-N-oxyl free radical ("4-phosphonoxy-TEMPO"), and esters of 4-hydroxy-TEMPO; 2,6-dialkyl-2,6-diaryl-1-piperidin-N-oxyl free radicals such as 2,6-dimethyl-2,6-diphenyl-1-piperidin-N-oxyl free radical; bis-(alicyclic-N-oxyl) diradicals ("bis-TEMPO"s) such as bis(1-oxyl-2,2,6,6-tetramethylpiperidin-4-yl)sebacate; 2,2,5,5-tetraalkyl-1-pyrrolidin-N-oxyl free radicals such as 2,2,5,5-tetramethyl-1-pyrrolidin-N-oxyl free radical ("PROXYL") and 3-carboxy-2,2,5,5-tetramethyl-1pyrrolidin-N-oxyl free radical; 2,5-dialkyl-2,5-diaryl-1-pyrrolidin-N-oxyl free radicals such as 2,5-dimethyl-2,5-diphenyl-1-pyrrolidin-N-oxyl free radical; di-alkyl nitroxides such as di-tert-butyl nitroxyl free radical; polymer-bound TEMPOs; 2,2,5,5-tetramethyl-3-oxazolidinyloxyl free radical; all-tertiary butyl N oxyl; and metal complexes with TEMPOs. Suitable hindered N-oxyl free radicals may further be selected from:

bis-TEMPO, oxo-TEMPO, hydroxy-TEMPO, an ester of hydroxy-TEMPO, polymer-bound TEMPO, PROXYL, DOXYL, di-tert-butyl nitroxyl free radical, 2,5-dimethyl-2,5-diphenyl-1-pyrrolidin-N-oxyl free radical, 4-phosphonoxy-TEMPO, a metal complex with TEMPO, and combinations thereof. Suitable hindered N-oxyl free radicals may still further be selected from: bis-TEMPO, 4-hydroxy-TEMPO, and combinations thereof. Sterically hindered N-oxyl free radicals may be used individually or in combination with other stable organic free free radicals.

When a free radical scavenger is used reduce or eliminate formation of free radical polymer during either the first polymerization, the second polymerizaiton, or both, that free radical scavenger will, typically, be present in an amount of at least 1, at least 2, at least 5, or at least 10 ppm; and no more than 1000, no more than 200, no more than 100, or no more than 50 ppm, based on the weight of polar olefin. A stable organic free radical may be utilized as the free radical scavenger in either the presence or absence of molecular oxygen or compounds which contain active oxygen moieties. The stable organic free radical of the present invention is, typically, in an amount of at least 1, at least 2, at least 5, or at least 10 ppm; and no more than 1000, no more than 200, no more than 100, or no more than 50 ppm, based on the weight of polar olefin used in the polymerization. It is further possible to use concentrations of stable organic free radicals which are twice, three times or even four times the concentration of the transition metal compound in the polymerization mixture. In the presence of molecular oxygen or compounds which contain active oxygen moieties, the oxygen enabled free radical scavenger of the present invention is, typically, used in an amount of at least 1, at least 2, at least 5, or at least 10 ppm; and no more than 1000, no more than 200, no more than 100, or no more than 50 ppm, based on the weight of polar olefin. When molecular oxygen or compounds which contain active oxygen moieties are present during either the first polymerization, the second polymerization, or both, a stable organic free radical and an oxygen enabled free radical scavenger may further be used in combination.

The first linear polymer of the present invention does not include a branched coordination polymer or a free radical polymer. A "first branched coordination polymer" produced during the first polymerization is present in the porous LP particles in an amount of: at least 0, at least 0.05, or at least 0.1 weight percent; and no more than 10, no more than 5, no more than 1, or no more than 0.5 weight percent, based on the weight of first linear polymer in the porous LP particles. A "first free radical polymer" produced during the first polymerization is present in the porous LP particles in an amount of: at least 0, at least 0.05, or at least 0.1 weight percent; and no more than 10, no more than 5, no more than 1, or no more than 0.5 weight percent, based on the weight of first linear polymer in the porous LP particles. A suitable first linear polymer may further be free of first branched coordination polymer, first free radical polymer, or both.

The second linear polymer of the present invention does not include a branched coordination polymer or a free radical polymer. A "second branched coordination polymer" produced during the second polymerization is present in the second LP particles in an amount of: at least 0, at least 0.05, or at least 0.1 weight percent; and no more than 10, no more than 5, no more than 1, or no more than 0.5 weight percent, based on the weight of second linear polymer in the second LP particles. A "second free radical polymer" produced during the second polymerization is present in the second LP particles in an amount of: at least 0, at least 0.05, or at least 0.1 weight percent; and no more than 10, no more than 5, no more than 1, or no more than 0.5 weight percent, based on the weight of second linear polymer in the second LP particles. A suitable second linear polymer may further be free of second branched coordination polymer, second free radical polymer, or both.

Examples of how the catalytic component of the present invention can be prepared and used to catalyze polymerization are disclosed in United States patent applications US 11/457,969, US 11/457,982, and US 11/457,996. Further examples can be found in the Experimental Section which follows.

**Experimental Examples.** Some embodiments of the invention will now be described in detail in the following Examples. The following abbreviations shown in Table 1 are used in the examples.

**Table 1: Abbreviations**

| Abbreviation | Description |
|---|---|
| dba | dibenzylideneacetone |
| FESEM | Field Emission Scanning Electron Microscopy |
| GPC | Gel Permeation Chromatography |
| MA | Methyl acrylate |
| NMR | Nuclear Magnetic Resonance |
| TCB | Trichlorobenzene |

**General procedures:** The polymerization reactions of Examples 7-15 were set up within a dry box under a

nitrogen atmosphere. Nitrogen was purified by passage through columns containing activated molecular sieves and Q-5 oxygen scavenger. Q-5 oxygen scavenger was acquired from Engelhard. Toluene was purified by passage through columns of activated molecular sieves (4 Å)/alumina/O2 remover (e.g., Q-5). Methyl acrylate (99%, MA)) was purchased from Aldrich and purified by passage through columns of MEHQ inhibitor remover and activated molecular sieves (4 Å), and purged with nitrogen for 0.5 hour.

**Proton nuclear magnetic resonance ($^1$H NMR) spectroscopic procedure for determining the molar ratio of non-polar olefin and polar olefin.** The samples were dissolved in deuterated di-chloro-benzene at 138 °C. The $^1$H NMR spectra were acquired on Varian 600 MHz NMR spectrometer at 110 °C. The MA-$OCH_3$ proton's resonance (~3.60 ppm) and ethylene -$CH_2$-$CH_2$- protons' resonance (~1.30 ppm) were integrated and used to calculate polymer composition. The integrals for ethylene was obtained by subtracting out the integrals for MA backbone protons.

**Determination of polymer molecular weight by Gel Permeation Chromatography (GPC).** Samples were shaken in trichlorobenzene (TCB) overnight at 140° C and filtered through 2 μm filtration cartridges from Polymer Laboratories (PL). Two injections were made for each sample. The average values of molecular weight and molecular weight distribution were reported. GPC separation was performed using 2 PL gel Mixed B LS columns and Refractive Index Detection (RI) in TCB at 140° C. The chromatographic conditions are summarized as follows. Columns: 2 PL gel MIXED B LS columns (300x7.5mm ID) + guard column (50x7.5 mm ID), particle size 10 μm; Column Temperature: 140° C; Eluent: TCB (HPLC grade), 1.0 ml/min flow rate at 140° C; Sample solvent: TCB; Injection volume of sample solution: 100 μL; Detector: RI (Temp = 140° C); Standards: Preweighed polystyrene mixtures having molecular weight in the range 580 to 6,035,000 g/mol with approximately 2.0 mg/mL in TCB were used to construct an 11 point calibration curve (linear) which was used to evaluate the relative molecular weight of the analyzed samples.

**Determination of the morphology of porous linear polymer particles by** FESEM: The morphology of the polymers was examined by Field Emission Scanning Electron Microscopy (FESEM). Sample Preparation: A small portion of the sample was dispersed onto a conductive adhesive tape. The sample was then coated with a thin (~5 to 10 nm) Au/Pd coating using a sputter coater. Sample Examination: he samples were imaged in a Field Emission Scanning Electron Microscope (JEOL 6700 FE-SEM). Most images were recorded using an accelerating voltage of 2.0 KeV and a secondary electron detector located in the sample chamber. The shape of the particles and size distribution was typically imaged at 50-200x. Fine detail of the morphology of individual particles was typically imaged at a magnification of at least 5,000x.

**Determination of polymer bulk density:** A pre-weighed glass vial was filled with a polymer sample (x grams). The vial was tapped on bench 3 times. A line was marked on the glass vial to match the top of the polymer. The polymer was removed. The vial was filled with deionized water till it matched the line. The weight of water (y grams) was converted to volume (z mL) ($z = y \times d$, d = density of water). The sample's bulk density was then determined as x/z g/cm$^3$. The same procedure was repeated twice. The average value of all three samples' bulk densities was calculated as the polymer bulk density.

**Carbon nuclear magnetic resonance ($^{13}$C NMR) spectroscopic procedure for determining the branch content of polymer.** The samples were dissolved in deuterated di-chloro-benzene at 138 °C. The $^{13}$C NMR spectra were acquired on Bruker AVACE400 (100.6 MHz) NMR spectrometer at 110 °C with 45° flip angle and 10 sec recycle delay time.

**Example 1. Synthesis of Ligand 131 (2-[(2-methoxyphenyl)(2',6'-dimethoxylbiphenyl)phosphino]benzene-sulfonic acid).** A first 100 mL Schlenk flask was charged with benzenesulfonic acid hydrate (1.7 g, 10.7 mmol, $C_6H_6O_3S{\cdot}H_2O$, 158.71 g/mol, MP Bio Medicals 98-11-3). The flask was evacuated under vacuum. The bottom of the flask was heated by a heat gun. The solid melted to form a brown liquid which started bubbling. The heating was continued until the liquid started to reflux and the pressure dropped to approximately 10 mTorr. The flask was refilled with nitrogen, cooled, and THF (anhydrous, Acros, -50 mL) was added to form a clear colorless solution. At 0 °C, n-BuLi (2.5 M hexane solution, 11.4 mmol, 8.6 mL, Aldrich) was added to yield a beige suspension, which was stirred for 0.5 hr before being cooled at - 78 °C. A second 100 mL Schlenk flask was charged with Mg (0.30 g, 0.0125 mmol, powder, Aldrich). THF (50 mL, anhydrous, Acros) and 2-bromoanisole (2.10 g, 0.0112 mmol, $C_7H_7BrO$, 187.04 g/mol, Acros) were added. The mixture was briefly sonicated (~30 sec) which became warm. The mixture was stirred without extra heating till it cooled down itself. A 200 mL Schlenk flask was charged with THF (~ 50mL). At -78 °C, $PCl_3$ (0.93 mL, 1.47 g, 0.0107 mol, 1.574 g/mL, 137.33 g/mol, Aldrich) was added via syringe. The suspension of $Li_2SO_3C_6H_5$ was added from the first 100 mL flask at - 78 °C via cannula. The mixture was stirred at - 78 °C for 0.5 hr. The Grignard reagent from the above preparation was cooled at - 78 °C and transferred to the 200 mL flask via cannula. The mixture was warmed to ambient temperature and stirred for about 1 hr to yield a yellow solution. A 500 mL Schlenk flask was charged with 2'-Br-2,6-$(MeO)_2$biphenyl (3.14 g, 10.7 mmol, $C_{14}H_{13}BrO_2$, 293.16 g/mol, Aldrich) and THF (150mL). At -78 °C, n-BuLi (4.3 mL, 2.5 M hexane solution, 10.7 mmol, Aldrich) was added to yield a thick white slurry, which was shaken by hand to ensure the mixing. 0.5 hr after the addition of n-BuLi, the clear solution of $PCl(SO_3C_6H_5Li)$(o-MeOPh) was added from the 200 mL flask via cannula. The mixture was allowed to gradually warm to the ambient temperature. The thick white slurry started to thaw and was stirred overnight to yield a clear yellow solution. The volatile was removed under vacuum.

The resulting solid was extracted using $CH_2Cl_2$ (200 mL), $H_2O$ (200 mL), HCl (concentrated, 20 mL). The organic layer was dried with $MgSO_4$ and the volatile was removed under vacuum. The pale yellow solid was collected, washing with THF (3×15 mL) and $Et_2O$ (3×15 mL) to yield a white powder (2.3 g, 44% yield). $^1H$ NMR ($CDCl_3$, 23°C): δ 8.32 (m, 1H), 7.71 (q, *J* = 8.5, 2H), 7.56 (m, 1H), 7.47-7.40 (m, 4H), 7.33-7.27 (m, 2H), 6.99 (m, 2H), 6.91 (m, 1H), 6.57 (d, *J* = 8.5, 1H), 6.44 (d, *J* = 8.5, 1H), 3.73 (s, 3H), 3.64 (s, 3H), 3.19 (s, 3H). $^{31}P$ NMR ($CDCl_3$, 23°C): δ -7.1 (s). LC-MS: *m*/*z* = 509.2.

**Example 2. Synthesis of Ligand 112, 2-[bis{2',6'-dimethoxylbiphenyl}phosphino]toluene-sulfonic** acid. Toluene sulfonic acid (2.05g., 10.8mmol) was added to a 100 mL flask ("Flask A") then placed under vacuum and refilled with nitrogen and charged with 50 mL of tetrahydrofuran (THF). Flask A was then placed in an ice bath and allowed to cool to 0 °C. 8.8 mL of 2.5 molar n-Butyl Lithium (n-BuLi) was then injected. Flask A was then placed in a dry ice/acetone bath and allowed to cool to about -78°C.

A separate 200 mL Schlenk flask ("Flask B") was placed under vacuum. Flask B was purged with nitrogen and charged with ~50 mL of THF. Phosphorus trichloride ($PCl_3$) (1.0mL, 11.5mmol) was then added to Flask B with agitation. Flask B was then placed in a dry ice/acetone bath and allowed to cool to about -78°C. The contents of Flask A were then slowly transferred to Flask B using a cannula with vigorous agitation.

A separate 500 mL flask ("Flask C") was purged and filled with nitrogen. Flask C was then charged with ~200 mL of THF and 2'-Bromo-2,6 dimethoxybiphenyl (7.26g., 24.8 mmol). Flask C was then placed in a dry ice/acetone bath and allowed to cool with agitation to about - 78°C. 10.03 mL of 2.5 molar n-BuLi was added to Flask C and allowed to react for about 10 minutes. The contents of Flask B were then transferred to Flask C, maintained at -78°C, using a cannula with continued vigorous agitation. Following the complete addition of the contents of Flask B into Flask C, Flask C was allowed to warm to room temperature for 45 min. The contents of Flask C were then poured into a 1000 mL recovery flask (Flask D) and the THF was removed, leaving a solid. The solid in Flask D was then mixed with - 150 mL of distilled water and then transferred to a separation flask (Flask E). 100 mL of Methylene Chloride ($CH_2Cl_2$) was added to the contents of Flask E. Flask E was shaken to mix the two layers. About 20 mL of concentrated HCl was then added to Flask E and was shaken again. - 20mL of 3A alcohol was added to Flask E and was shaken again. The mixture in Flask E was then allowed to settle, forming two layers--an organic phase on the bottom and an aqueous phase on the top. The organic layer was collected. The aqueous phase was washed with 50 mL of $CH_2Cl_2$. The organic wash material was collected and added to the previously collected organic layer material. The combined organic material was then contacted with Magnesium Sulfate and rotovaped to dryness, leaving a solid. The solid was then washed with THF and diethyl ether to remove impurities. Approximately 2 g. of the washed solid 2-[Bis-(2',6'-Dimethoxy-biphenyl-2yl)-phosphanyl]-toluene sulfonic acid was collected by filtration.

**Example 3. Synthesis of Ligand 132, 2-[(2-methoxyphenyl)(2',6'-dimethoxylbiphenyl) phosphino]toluene-sulfonic acid.** Magnesium Reagent Plus ≥99% powder, 50 mesh (0.3g., 12.3mmol) was added to a 100 mL flask ("Flask A") then placed under vacuum and refilled with nitrogen and charged with 60 mL of tetrahydrofuran (THF). 2-Bromoanisole (2.18g., 11.7mmol) was added to Flask A. The contents in Flask A were allowed to react for 2 hours. Flask A was then placed in a dry ice/acetone bath and allowed to cool to about -78°C.

Toluene Sulfonic Acid (2.22g., 11.7mmol) was placed into a separate 100 mL Schlenk flask ("Flask B") and was placed under vacuum. Flask B was purged with nitrogen and charged with -60 mL of THF. Flask B was then placed in an ice bath and allowed to cool to 0 °C. 9.3 mL of 2.5 molar n-Butyl Lithium (n-BuLi) was then injected. Flask B was then placed in a dry ice/acetone bath and allowed to cool to about -78°C. A separate 200 mL Schlenk flask ("Flask C") was placed under vacuum. Flask C was purged with nitrogen and charged with ~50 mL of THF. Phosphorus trichloride ($PCl_3$) (1.02mL, 11.7 mmol) was then added to Flask C with agitation. Flask C was then placed in a dry ice/acetone bath and allowed to cool to about -78°C. The contents of Flask B were then slowly transferred to Flask C using a cannula with vigorous agitation. The contents in Flask C were allowed to react for 45 min. The contents of Flask A were then slowly transferred to Flask C and the contents of Flask C were slowly warmed up to room temperature. Flask C was then placed in a dry ice/acetone bath and allowed to cool to about -78°C.

A separate 500 mL flask ("Flask D") was purged and filled with nitrogen. Flask D was then charged with -150 mL of THF and 2'-Bromo-2,6 dimethoxybiphenyl (3.42g., 11.7 mmol). Flask D was then placed in a dry ice/acetone bath and allowed to cool with agitation to about - 78°C. 4.7 mL of 2.5 molar n-BuLi was added to Flask D and allowed to react for about 15 minutes. The contents of Flask C were then transferred to Flask D, maintained at -78°C, using a cannula with continued vigorous agitation. Following the complete addition of the contents of Flask C into Flask D, Flask D was allowed to warm to room temperature overnight. The contents of Flask D were then poured into a 1000 mL recovery flask (Flask E) and the THF was removed, leaving a solid. The solid in Flask E was then mixed with ~ 100 mL of distilled water and then transferred to a separation flask (Flask F). 100 mL of Methylene Chloride ($CH_2Cl_2$) was added to the contents of Flask F. Flask F was shaken to mix the two layers. About 20 mL of concentrated HCl was then added to Flask F. Flask F was shaken again. The mixture in Flask F was then allowed to settle, forming two layers--an organic phase on the bottom and an aqueous phase on the top. The organic layer was collected. The aqueous phase was washed with 50 mL of $CH_2Cl_2$. The organic wash material was collected and added to the previously collected organic layer material. The combined organic material was then contacted with Magnesium Sulfate and rotovaped to dryness, leaving a solid. The

solid was then washed with THF and diethyl ether to remove impurities. Approximately 1.65 g. of the washed product solid 2-[(2',6'-Dimethoxy-biphenyl-2yl)-(2-methoxy-phenyl)-phosphanyl]-toluene sulfonic acid was collected by filtration.

**Example 4. Synthesis of 112 Dimer Catalyst Component. {2-[bis{2',6'dimethoxylbiphenyl} phosphino] toluene-sulfonic acid}palladium dimer.** 1.364 g ligand 112 (from Example 2) was added to -20 mL of tetrahydrofuran (THF) in a reaction flask with agitation. To the contents of the reaction flask was then added 3.09 g tetramethylethylenediamine palladium (II) with continued agitation. The contents of the reaction flask were then agitated for approximately 1 hour. The product catalyst complex was collected by filtration through a fine porosity frit and washed with THF. The product catalyst complex was then subjected to vacuum to remove the remaining volatiles, leaving 6.98 g of white solid as the reaction product.

**Example 5. Synthesis of 132 Dimer Catalyst Component, {2-[(2-methoxyphenyl)(2',6'-dimethoxylbiphenyl)phosphino]toluene-sulfonic acid}palladium dimer.** 0.932 g ligand 132 (from Example 3) was added to ~20 mL of tetrahydrofuran (THF) in a reaction flask with agitation. To the contents of the reaction flask was then added 0.482 g tetramethylethylenediamine palladium (II) with continued agitation. The contents of the reaction flask were then agitated for approximately 1 hour. The product catalyst complex was collected by filtration through a fine porosity frit and washed with THF. The product catalyst complex was then subjected to vacuum to remove the remaining volatiles, leaving 0.482 g of white solid as the reaction product.

**Example 6. Preparation of Catalyst Component Stock Solution 1.** A vial was charged with $Pd(dba)_2$ (19.8 mg, 0.0340 mmol, $Pd(C_{17}H_{14}O)_2$, Alfa Aesar, 575.00 g/mol, dba = dibenzylideneacetone) and Ligand 131 (20.0 mg, 0.0393 mmol, $C_{27}H_{25}O_6PS$, 508.5 g/mol). Toluene (10 mL) was added. The mixture was rigorously shaken to yield a dark red solution with a trace amount of particles.

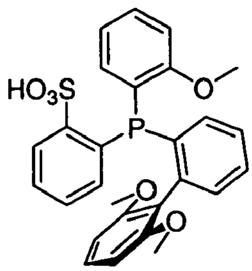
Ligand 131

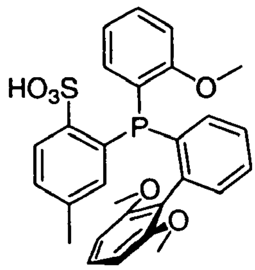
Ligand 132

**Example 7. Preparation of plural porous linear poly(ethylene-co-methyl acrylate) particles ("porous LMPP particles).**

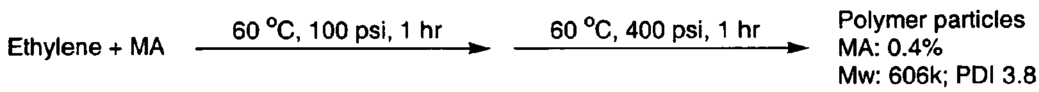


An Endeavor reaction cell was charged with methyl acrylate (1 mL) and toluene (4 mL). The reaction cell was heated at 60 °C and charged with ethylene (100 psi) before Catalyst Component Stock Solution 1 (0.5 mL) was added followed by additional rinse of toluene (0.5 mL). The reaction mixture was stirred at 60 °C for 1 hour, after which the pressure of ethylene was elevated to 400 psi and the reaction mixture was stirred at 60 °C for another hour.

The reaction mixture was cooled to ambient temperature, and unreacted ethylene was ventilated. The reaction mixture was quenched with methanol (100 mL). The polymer was isolated by centrifuge and dried under vacuum overnight to yield white particles (1214 mg). $^1H$ NMR spectroscopy revealed that the copolymer had a composition of ethylene (99.6 mole%) and methyl acrylate (0.4 mole%). GPC experiment revealed that the copolymer had a molecular weight of 606,000 $g \cdot mol^{-1}$ (Mw) with a polydispersity of 3.8. SEM experiment revealed that the copolymer was included of primary particles of ca. 2 $\mu$m diameter and their aggregate as secondary particles of ca. 80 $\mu$m (see **Figures 1a and 1b)** The bulk density of the polymer was determined as 0.25(5) $g.cm^{-3}$.

**Example 8. Preparation of plural porous linear poly(ethylene-co-methyl acrylate) particles ("porous LMPP particles).**

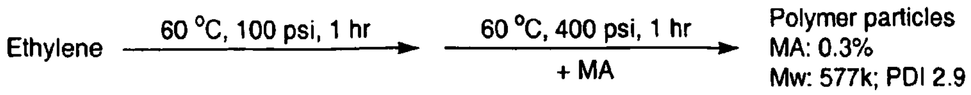


An Endeavor reaction cell was charged with toluene (3.5 mL). The reaction cell was heated at 60 °C and charged with ethylene (100 psi) before Catalyst Stock Solution 1 (0.5 mL) was added followed by additional rinse of toluene (0.5 mL). The reaction mixture was stirred at 60 °C for 1 hour. Methyl acrylate (1 mL) was added. Additional toluene (0.5 mL) was added as rinse. The pressure of ethylene was elevated to 400 psi and the reaction mixture was stirred at 60 °C for another hour. The reaction mixture was cooled to ambient temperature, and unreacted ethylene was ventilated.

The reaction mixture was quenched with methanol (100 mL). The polymer was isolated by centrifuge and dried under vacuum overnight to yield white particle (760 mg). $^1$H NMR spectroscopy revealed that the copolymer had a composition of ethylene (99.7 mole%) and methyl acrylate (0.3 mole%). GPC experiment revealed that the copolymer had a molecular weight of 577,000 g·mol$^{-1}$ (Mw) with a polydispersity of 2.9. SEM experiment revealed that the copolymer was included of ca. 2 μm diameter and their aggregate as secondary particles of ca. 250 μm diameter (see **Figure 2).** The bulk density of the polymer was determined as 0.12(1) g·cm$^{-3}$.

**Example 9. Polymerization of ethylene, catalyzed by 132 Dimer, in ethyl acetate.** An Endeavor reaction cell was charged with 5.0 mL ethyl acetate. The stirring rate was set at 925 rpm using anchor bladed stirring shaft. The reaction cell was heated to 80 °C and charged with ethylene gas to a pressure of 400 psig. After temperature and pressure equilibration, 0.5 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. The resulting mixture was stirred for 3 hours, and then the polymer was isolated by centrifugation. The product was dried under vacuum at 60 °C for 18 hours. The yield of white particles (porous LNPP particles) produced was 0.124 g.

**Example 10. Polymerization of ethylene, catalyzed by 132 Dimer, in ethyl acetate.** An An Endeavor reaction cell was charged with 5.0 mL ethyl acetate. The stirring rate was set at 925 rpm using anchor bladed stirring shaft. The reaction cell was heated to 90 °C and charged with ethylene gas to a pressure of 400 psig. After temperature and pressure equilibration, 0.5 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 °C for 18 hours. The yield of white particles produced was 0.228 g. FESEM micrographs revealed that the copolymer was comprised of a hierarchical structure of primary particles of ca. 1-2 μm diameter, secondary particles ca. 10-20 μm in diameter and their aggregate as tertiary particles of ca. 100 μm.

**Example 11. Polymerization of ethylene, catalyzed by 132 Dimer, in ethyl acetate.** An An Endeavor reaction cell was charged with 5.0 mL ethyl acetate. The stirring rate was set at 925 rpm using anchor bladed stirring shaft. The reaction cell was heated to 100 °C and charged with ethylene gas to a pressure of 400 psig. After temperature and pressure equilibration, 0.5 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 °C for 18 hours. The yield of white particles produced was 0.293 g.

**Example 12. Copolymerization of ethylene and methyl acrylate, catalyzed by 132 Dimer, in ethyl acetate.** The methyl acrylate was purified by sparging with nitrogen, followed by drying over 3A molecular sieves. No inhibitor remover was used. An An Endeavor reaction cell was charged with 1.0 mL (11.1 mmol) of methyl acrylate inhibited with 1000 ppm 4-HTEMPO and 4.0 mL ethyl acetate. The stirring rate was set at 925 rpm using anchor bladed stirring shaft. The reaction cell was heated to 70 °C and charged with ethylene gas to a pressure of 400 psig. After temperature and pressure equilibration, 1.0 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 °C for 18 hours. The yield of white particles produced was 0.071 g.

$^1$H NMR spectroscopy indicated that the copolymer had a composition of ethylene (99.6 mole%) and methyl acrylate (0.4 mole%).

**Example 13. Copolymerization of ethylene and methyl acrylate, catalyzed by 132 Dimer, in ethyl acetate.** The methyl acrylate was purified by sparging with nitrogen, followed by drying over 3A molecular sieves. No inhibitor remover was used. An Endeavor reaction cell was charged with 1.0 mL (11.1 mmol) of methyl acrylate inhibited with 1000 ppm 4-HTEMPO and 4.0 mL ethyl acetate. The stirring rate was set at 925 rpm using anchor bladed stirring shaft.

The reaction cell was heated to 80 °C and charged with ethylene gas to a pressure of 400 psig. After temperature and pressure equilibration, 1.0 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 oC for 18 hours. The yield of white particles produced was 0.134 g. $^1$H NMR spectroscopy indicated that the copolymer had a composition of ethylene (99.2 mole%) and methyl acrylate (0.8 mole%). FSSEM microscopy revealed that the copolymer was comprised of a hierarchical structure of primary particles of ca. 1-2 μm diameter, secondary particles ca. 10-20 μm in diameter and their aggregate as tertiary particles of ca. 100-400 μm (**see Figures 3a and 3b**).

**Example 14. Copolymerization of ethylene and methyl acrylate, catalyzed by 132 Dimer, in ethyl acetate.** The methyl acrylate was purified by sparging with nitrogen, followed by drying over 3A molecular sieves. No inhibitor remover was used. An Endeavor reaction cell was charged with 1.0 mL (11.1 mmol) of methyl acrylate inhibited with 1000 ppm 4-HTEMPO and 4.0 mL ethyl acetate. The stirring rate was set at 925 rpm using anchor bladed stirring shaft. The reaction cell was heated to 90 °C and charged with ethylene gas to a pressure of 400 psig. After temperature and pressure equilibration, 1.0 μmol of catalyst (132 dimer) as a solution in 0.5 mL toluene was injected into the reaction cell, followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 °C for 18 hours. The yield of white particles produced was 0.033 g. $^1$H NMR spectroscopy indicated that the copolymer had a composition of ethylene (99.0 mole%) and methyl acrylate (1.0 mole%).

**Example 15. Copolymerization of ethylene and dimethyl acrylamide, catalyzed by 132 Dimer, in ethyl acetate.** The dimethyl acrylamide (DMA) was purified by vacuum distillation from $CaH_2$ directly into a flask containing a small amount of 4-HTEMPO. The monomer was then stored in the drybox. An Endeavor reaction cell was charged with 1.0 mL (9.70 mmol) of dimethyl acrylamide inhibited with 4-HTEMPO and 4.0 mL toluene. The stirring rate was set at 925 rpm using anchor bladed stirring shaft. The reaction cell was heated to 90 °C and charged with ethylene gas to a pressure of 400 psig. After temperature and pressure equilibration, 2.0 μmol of catalyst (132 dimer) as a solution in 0.5 mL toluene was injected into the reaction cell followed by an additional 0.5 mL toluene rinse. The reaction mixture was stirred for 1 hour, after which the residual ethylene was vented and the reactor was allowed to cool. The reaction mixture was added to 50 mL of stirred methanol. After stirring 3 hours, the polymer was isolated by centrifugation. The product was dried under vacuum at 60 °C for 18 hours. The yield of white particles produced was 0.11 g. $^1$H NMR spectroscopy indicated that the copolymer had a composition of ethylene (99.9 mole%) and dimethyl acrylamide (0.1 mole%). SEM experiment revealed that the copolymer was comprised of a hierarchical structure of primary particles of ca. 1-2 μm diameter, secondary particles ca. 10-20 μm in diameter and their aggregate as tertiary particles of ca. 200-800 μm.

**Example 16. Copolymerization of ethylene and methyl acrylate in the presence of plural porous linear mixed polarity polymer particles to form second LP particles containing first linear polymer and second linear polymer.** The plural porous LMPP particles of Example 7 (100 mg) are mixed with methyl acrylate (1 mL) and ethyl acetate (4 mL) in an Endeavor reaction cell. The reaction mixture is heated at 90 °C and charged with ethylene (400 psi) before Catalyst Stock Solution 1 (0.5 mL) is added followed by additional rinse of toluene (0.5 mL). The reaction mixture is stirred at 90 °C for 1 hour. The reaction mixture is cooled to ambient temperature, and unreacted ethylene is ventilated. The reaction mixture is quenched with methanol (100 mL). The polymer is isolated by centrifuge and dried under vacuum overnight to yield white particles (900 mg) which are second linear polymer particles. $^1$H NMR spectroscopy reveals that the copolymer should have a composition of ethylene (98 mole%) and methyl acrylate (2 mole%). GPC experiment reveals that the copolymer should have a molecular weight of 145,000 $g \cdot mol^{-1}$ (Mw) with a polydispersity of 4.2. SEM experiment should reveal that the copolymer is comprised of spherical particles of ca. 150 μm. The bulk density of the polymer should be determined as 0.28 $g \cdot cm^{-3}$.

**Example 17. Copolymerization of ethylene and methyl acrylate, catalyzed by 132 Dimer, in toluene.** Ethylene and methyl acrylate were copolymerized in toluene solution using 132 dimer catalyst The reaction was carried out in a 2 liter Parr reactor system. Methyl acrylate was obtained from Aldrich and was dried using 3 Å molecular sieves and sparged with nitrogen to remove oxygen. 1000 ppm of 4 hydroxy TEMPO was added to inhibit free radical polymerization. 400 mL of methyl acrylate was charged to an inerted (nitrogen) reactor. HPLC grade toluene obtained from Aldrich was dried using 3 Å molecular sieves and sparged with nitrogen to remove oxygen. 900 mL of toluene were charged to the inerted reactor. The catalyst solution was prepared by dissolving 50 mg of 132 dimer catalyst in 100 mL of dry toluene in a nitrogen atmosphere. The catalyst solution was set aside. The reactor was sealed and heated to 90 °C while simultaneously adding ethylene to a final pressure of 400 psig. The copolymerization was initiated by feeding in the catalyst solution at a rate of about 1 mL/minute. The total catalyst feed time is about 100 minutes. The pressure was maintained at 400 psig by feeding in ethylene equal to the rate of ethylene uptake via the copolymerization. The total reaction time including the feed was 3 hours. The reaction was cooled to room temperature and the reaction slurry

was added to 2000 mL of methanol. The poly[(non-polar olefin)-(polar olefin)] produced was filtered and dried in a vacuum oven at 60 °C. The final polymer product weighed 61 grams. The final polymer was not in discrete particulate form. The composition of the copolymer was determined by NMR to be 2.1 mole % methyl acrylate (6.2 weight %). The weight average molecular weight by GPC was 182,000 with a polydispersity index of 1.8. No branching (i.e., less than 1 branch per 1,000 carbon atoms) was observed by the C13 method. This example demonstrates that the catalyst composition of the present invention produces linear polymers having low, or no branching. This example further demonstrates a case in which use of a diluent (here toluene) at a temperature (here 90°C) at which that diluent is soluble in the first polymer to a high enough extent that the plasticized first polymer cannot support formation of the discrete porous structure typical of porous linear polymer particles, or cannot maintain that structure if initially formed. In this example plural LMPP particles were not recovered after the polymerization. In contrast, the polymerizations of Examples 7 and 8 also used toluene as diluent, but in those cases the polymerization temperature was 60 °C, such that the structure of the porous LMPP particles was was formed and maintained.

## Claims

**1.** A porous linear mixed polarity polymer composition comprising:

plural porous linear mixed polarity polymer particles comprising:

(A) a linear poly[(non-polar olefin)-(polar olefin)] comprising, as polymerized units, a non-polar olefin and a polar olefin, wherein the linear poly[(non-polar olefin)-(polar olefin)]:

(a) is a coordination polymer; and
(b) has a branch content of 0 branches/1,000 carbon atoms to no more than 15 branches/1,000 carbon atoms, as determined by Carbon 13 NMR; and

(B) a at least one pore,

wherein the porous plural linear mixed polarity polymer particles have:

(i) an average particle diameter of at least 1 microns to no more than 1000 microns;
(ii) a total pore volume of at least 0.10 cc/g to no more than 9.00 cc/g, as measured by BET Nitrogen adsorption in cubic centimeters of pore volume per gram of the linear mixed polarity polymer particles, for all pores having a diameter of 0.005 microns to 10 microns; and
(iii) a surface area of at least 10 square meters/g to no more than 1000 square meters/g, as measured by BET Nitrogen adsorption.

**2.** The porous linear mixed polarity polymer composition of claim 1, further comprising a free radical addition polymer in an amount of at least 0 percent by weight and no more than 1 percent by weight, based on the weight of the linear poly[(non-polar olefin)-(polar olefin)].

**3.** The porous linear mixed polarity polymer composition of claim 1, wherein the molar ratio of non-polar olefin and polar olefin are present, as polymerized units, in the linear poly[(non-polar olefin)-(polar olefin)] in a molar ratio of at least 80:20 mol/mol, (non-polar olefin:polar olefin), and no more than 99.95:0.05 mol/mol, (non-polar olefin):(polar olefin).

**4.** The porous linear mixed polarity polymer composition of claim 1, further comprising a catalytic component comprising an organometallic complex capable of copolymerizing the non-polar olefin and the polar olefin to form the linear poly[(non-polar olefin)-(polar olefin)],
wherein the organometallic complex comprises a metal center, M, complexed with at least one ligand, wherein the at least one ligand has a structure according to Formula (I)

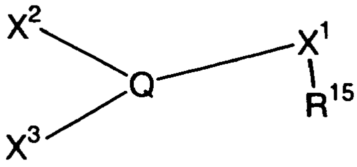

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$.

5. A porous linear mixed polarity polymer composition of claim 1, wherein porous plural linear mixed polarity polymer particles have:

a bulk density of at least 0.12 and no more than 0.75; and
an average aspect ratio of at least 1:1 and no more than 2:1.

6. The porous linear mixed polarity polymer composition of claim 4, wherein:

the non-polar olefin is selected from ethylene, a $C_2$-$C_{20}$ acyclic aliphatic olefin, and combinations thereof; and the polar olefin is represented by Formula III

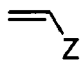

(III)

wherein Z is selected from an aromatic hydrocarbyl group, -OY, -COY and -CO2Y; where Y is selected from hydrogen and R19; where R19 is selected from a hydrocarbyl group, an aromatic hydrocarbyl group and derivatives thereof.

7. A porous linear non-polar polymer composition comprising:

plural porous linear non-polar polymer particles comprising:

(A) a linear poly(non-polar olefin) comprising, as polymerized units, a non-polar olefin, wherein the linear poly(non-polar olefin):

(a) is a coordination polymer; and
(b) has a branch content of 0 branches/1,000 carbon atoms to no more than 15 branches/1,000 carbon atoms, as determined by Carbon 13 NMR;

(B) a catalytic component comprising an organometallic complex capable of copolymerizing the non-polar olefin to form the linear poly(non-polar olefin), wherein the organometallic complex comprises a metal center, M, complexed with at least one ligand, wherein the at least one ligand has a structure according to Formula (I)

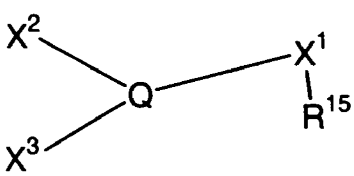

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$; and
(C) at least one pore,

wherein the plural porous linear non-polar polymer particles have:

(i) an average particle diameter of at least 2 microns to no more than 1000 microns;
(ii) a total pore volume of at least 0.10 cc/g to no more than 9.00 cc/g, as measured by BET Nitrogen adsorption in cubic centimeters of pore volume per gram of the linear mixed polarity polymer particles, for all pores having a diameter of 0.005 microns to 10 microns; and
(iii) a surface area of at least 10 square meters/g to no more than 1000 square meters/g, as measured by BET Nitrogen adsorption; and

wherein the non-polar olefin is selected from ethylene, a $C_2$-$C_{20}$ acyclic aliphatic olefin, and combinations thereof.

**8.** A process of making a porous linear polymer composition, comprising the steps of:

(A) combining:

(i) a catalytic component comprising an organometallic complex capable of copolymerizing a first monomer to form a first linear polymer,
wherein the organometallic complex comprises a metal center, M, complexed with at least one ligand, wherein the at least one ligand has a structure according to Formula (I)

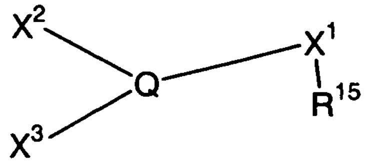

(I)

wherein M is selected from Ni and Pd;
wherein $X^1$, $X^2$ and $X^3$ are independently selected from a hydrocarbyl group, an aromatic hydrocarbyl group and derivatives thereof;
wherein Q is selected from phosphorus and arsenic; and
wherein $R^{15}$ is selected from $-SO_3$, $-PO_3$, $-AsO_3$, and $-C(CF_3)_2O$;
(ii) a diluent, wherein the diluent is not miscible with the first linear polymer; and
(iii) a first monomer selected from a non-polar olefin, or from a combination of a non-polar olefin and a polar olefin, wherein:

the non-polar olefin is selected from ethylene, a $C_2$-$C_{20}$ acyclic aliphatic olefin, and combinations thereof; and
the polar olefin is represented by Formula III

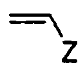

(III)

wherein Z is selected from an aromatic hydrocarbyl group, -OY, -COY and -CO2Y; where Y is selected from hydrogen and R19; where R19 is selected from a hydrocarbyl group, an aromatic hydrocarbyl group and derivatives thereof; and
wherein the first monomer is miscible with the diluent;
(B) polymerizing the first monomer, in the presence of the catalytic component, to form plural porous linear

polymer particles comprising:

(i) a first linear polymer which:

(a) is a coordination polymer;
(b) is a linear polymer, having a branch content of 0 branches/1,000 carbon atoms to no more than 15 branches/1,000 carbon atoms, as determined by Carbon 13 NMR; and
(c) is a linear polymer selected from linear poly(non-polar olefin), linear poly[(non-polar olefin)-(polar olefin)], and combinations thereof; and

(ii) at least one pore,
wherein the first linear polymer precipitates from the diluent to form the plural porous linear polymer particles;
wherein the plural porous linear polymer particles have:

(a) an average particle diameter of at least 1 microns to no more than 1000 microns;
(b) a total pore volume of at least 0.10 cc/g to no more than 9.00 cc/g, as measured by BET Nitrogen adsorption in cubic centimeters of pore volume per gram of the mixed polarity framework, for all pores having a diameter of 0.005 microns to 10 microns; and
(c) a surface area of at least 10 square meters/g to no more than 1000 square meters/g, as measured by BET Nitrogen adsorption; and

(C) optionally, isolating the plural porous linear polymer particles.

**9.** The process of claim 8, wherein step (A) of combining further comprises

(iv) a free radical scavenger present in an amount sufficient to suppress the formation of a free radical polymer such that the amount of the free radical polymer formed is at least 0.0 percent by weight and no more than 1.0 percent by weight, based on the weight of the first linear polymer.

**10.** The process of claim 8, further comprising the steps of:

(D) contacting the plural porous linear polymer particles with:

(i) optionally, an additional amount of the catalytic component; and
(ii) a second monomer selected a from a non-polar olefin, or from a combination of a non-polar olefin and a polar olefin, wherein:

the non-polar olefin is selected from ethylene, a $C_2$-$C_{20}$ acyclic aliphatic olefin, and combinations thereof; and
the polar olefin is represented by Formula III

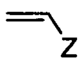 (III)

wherein Z is selected from an aromatic hydrocarbyl group, -OY, -COY and -CO2Y; where Y is selected from hydrogen and R19; where R19 is selected from a hydrocarbyl group, an aromatic hydrocarbyl group and derivatives thereof; and
wherein the second monomer is miscible with the diluent; and
wherein the second monomer and the first monomer are the same or different;

(E) polymerizing the second monomer to form plural second linear polymer particles comprising:

(i) the first linear polymer;
(ii) a second linear polymer which:

(a) is a coordination polymer;
(b) is a linear polymer, having a branch content of 0 branches/1,000 carbon atoms to no more than 15

branches/1,000 carbon atoms, as determined by Carbon 13 NMR;
(c) is a linear polymer selected from linear poly(non-polar olefin), linear poly[(non-polar olefin)-(polar olefin)], and combinations thereof; and
(d) is insoluble in the diluent; and

(iii) optionally, at least one pore; and

(F) optionally, isolating the plural second linear polymer particles.

**11.** The process of claim 8, wherein the second linear polymer particles have:

a bulk density of at least 0.12 and no more than 0.85; and
an average aspect ratio of at least 1:1 and no more than 2:1.

*Fig. 1a*

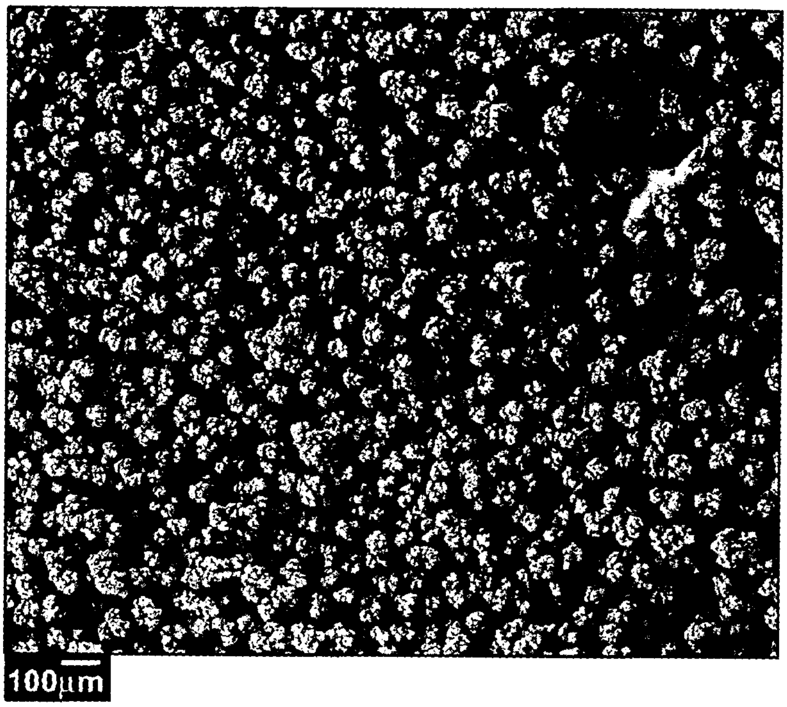


*Fig. 1b*

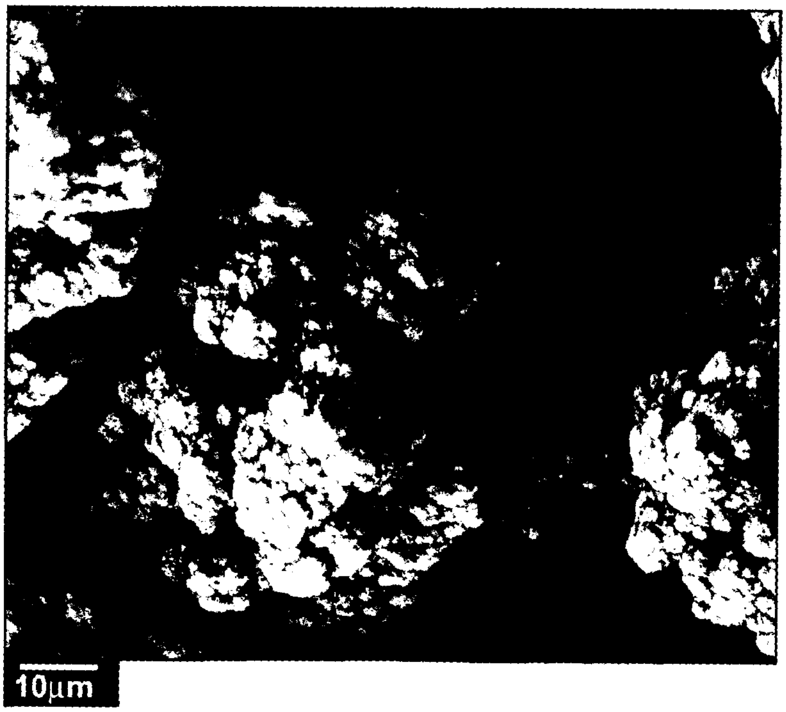

*Fig. 2*

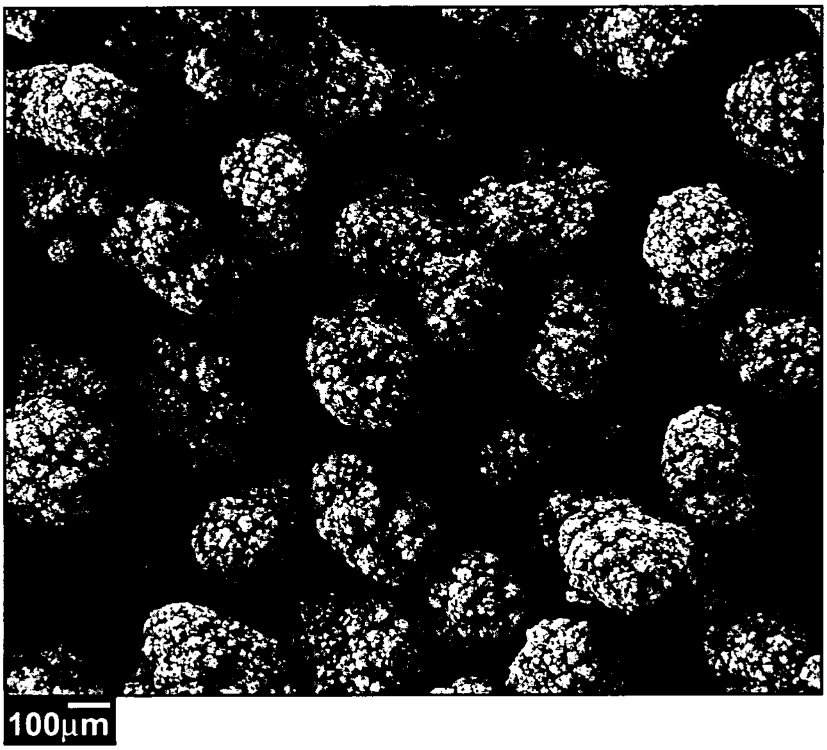

Fig. 3a

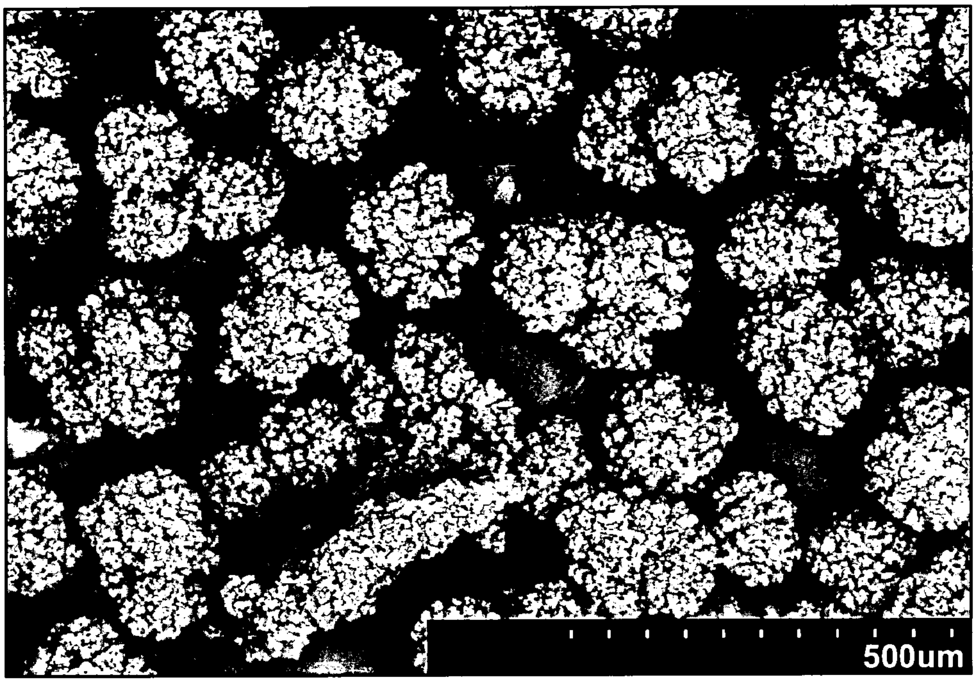


Fig. 3b

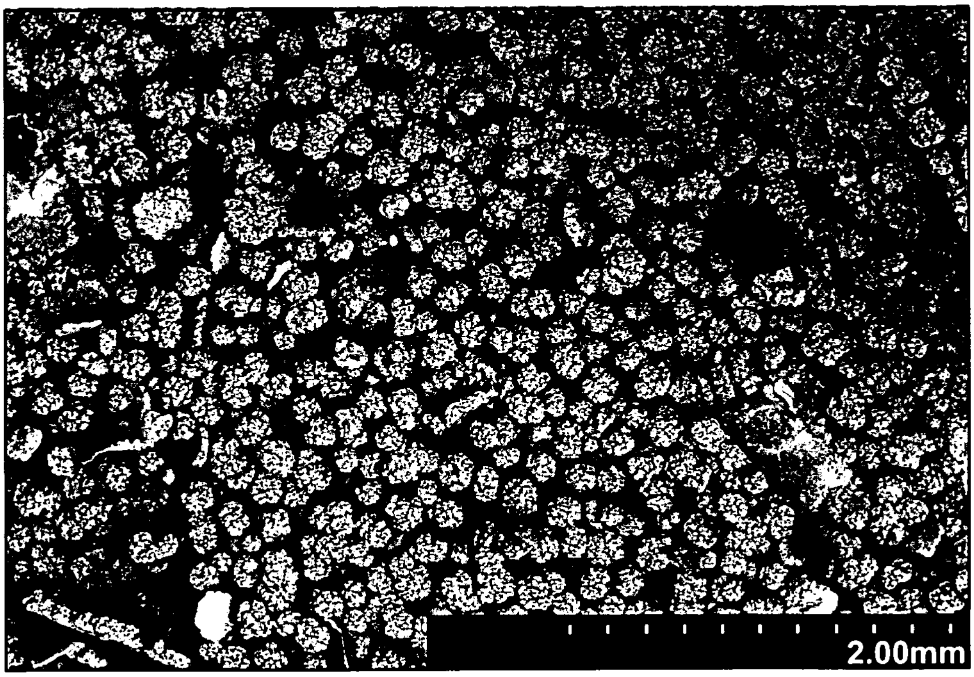

European Patent Office

# EUROPEAN SEARCH REPORT

Application Number
EP 08 25 0646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DRENT EITE ET AL: "Palladium catalysed copolymerisation of ethene with alkylacrylates: polar comonomer built into the linear polymer chain" CHEMICAL COMMUNICATIONS - CHEMCOM, ROYAL SOCIETY OF CHEMISTRY, no. 7, 1 January 2002 (2002-01-01), pages 744-745, XP002430325 ISSN: 1359-7345 * the whole document * ----- | 1-11 | INV. C08F10/00 |
| X | YOUNKIN T R ET AL: "NEUTRAL, SINGLE-COMPONENT NICKEL(II) POLYOLEFIN CATALYSTS THAT TOLERATE HETEROATOMS" SCIENCE, WASHINGTON, DC, vol. 287, 1 January 2000 (2000-01-01), pages 460-462, XP000914927 ISSN: 0036-8075 * the whole document * ----- | 1-11 | |
| A | PICKEL M ET AL: "Facile Preparation of activation of High-Productivity Single-Site Nickel Catalysts for Highly Linear Polyethylene" HELVETICA CHIMICA ACTA, VERLAG HELVETICA CHIMICA ACTA. BASEL, CH, vol. 85, 1 December 2002 (2002-12-01), pages 4337-4352, XP002253038 ISSN: 0018-019X * the whole document * ----- | 1 | TECHNICAL FIELDS SEARCHED (IPC) C08F |
| A | US 5 498 582 A (KRAUSE MICHAEL J [US] ET AL) 12 March 1996 (1996-03-12) * the whole document * ----- | 1-11 | |
| A | US 4 029 862 A (LIU GORDON Y T ET AL) 14 June 1977 (1977-06-14) * the whole document * ----- | 1-11 | |

The present search report has been drawn up for all claims

2

| Place of search | Date of completion of the search | Examiner |
|---|---|---|
| Munich | 6 June 2008 | Knutzen-Mies, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 08 25 0646

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2008

| Patent document cited in search report | | Publication date | Patent family member(s) | | | Publication date |
|---|---|---|---|---|---|---|
| US 5498582 | A | 12-03-1996 | CA | 2174768 | A1 | 15-06-1995 |
| | | | EP | 0732972 | A1 | 25-09-1996 |
| | | | JP | 3274139 | B2 | 15-04-2002 |
| | | | JP | 9506135 | T | 17-06-1997 |
| | | | WO | 9515815 | A1 | 15-06-1995 |
| US 4029862 | A | 14-06-1977 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7087687 B
- US 4360617 A
- US 11457969 B
- US 11457982 B
- US 11457996 B


### Non-patent literature cited in the description


- *Chem. Rev.,* 2000, vol. 100, 1347-1375
- *Angew. Chem. Int. Ed,* 1999, vol. 38 (8), 1058-1060
- **D. W. VAN KREVELEN.** Properties of Polymers. Elsevier, 1990, 189-225
- **OLABISI et al.** Polymer-Polymer Miscibility. Academic Press, 1979
- **COLEMAN et al.** Specific Interactions and the Miscibility of Polymer Blends. *Technomic,* 1991
- **A. F. M. BARTON.** CRC Handbook of Solubility Parameters and Other Cohesion Parameters. CRC Press, 1991
- **OAKLEY, R.T.** *Prog. Inorg. Chem,* 1998, vol. 36, 299
- **BANISTER, A.J. et al.** *Adv. Hetero. Chem.,* 1995, vol. 62, 137